# EUROPEAN PATENT APPLICATION

(11) **EP 4 838 685 A1**
(43) Date of publication of application: **11.11.2026**
(21) Application number: 24928809.3
(22) Date of filing: 11.03.2024
(51) Int. Cl.: H01M 50/547

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); REN, Miaomiao, Ningde, Fujian 352100 (CN); CHEN, Long, Ningde, Fujian 352100 (CN); LI, Xing, Ningde, Fujian 352100 (CN); ZHAO, Fenggang, Ningde, Fujian 352100 (CN); WU, Kai, Ningde, Fujian 352100 (CN)
(74) Representative: Kraus & Lederer PartGmbB
(86) International application number: PCT/CN2024/080999
(87) International publication number: WO 2025/189316

(57) **Abstract**

A battery cell (100), a battery (1100), and an electrical device. The battery cell (100) comprises a casing (110), an electrode assembly (120), a first electrode terminal (131) and a second electrode terminal (132), wherein the electrode assembly (120) is arranged in the casing (110); the first electrode terminal (131) is electrically connected to the electrode assembly (120); the second electrode terminal (132) is electrically connected to the electrode assembly (120); and the first electrode terminal (131) and the second electrode terminal (132) have different polarities for outputting or inputting electric energy. The casing (110) is of a prismatic structure; the casing (110) is provided with a first side wall (113) and a second side wall (114) arranged opposite each other in the axial direction, the first side wall (113) and the second side wall (114) being square, and at least one of the first electrode terminal (131) and the second electrode terminal (132) being arranged on the first side wall (113) or the second side wall (114). The casing (110) is of a quadrangular structure; thus, the battery cell (100) has a square and regular shape, allowing flexible grouping of battery cells (100), thereby meeting the placement requirements of most cases (200), and also enabling better utilization of the space in a case (200), improving the volumetric energy density of the battery (1100).

## Description

### TECHNICAL FIELD

The present application relates to the field of battery technologies, and in particular, to a battery cell, a battery, and an electrical device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

A battery usually includes a case and a plurality of battery cells, and the plurality of battery cells are placed in the case. However, due to the limitations of a shape and size of a battery cell, the battery cell is difficult to meet loading requirements of batteries of some sizes.

The above statement merely provides the background information related to the present application and does not necessarily constitute the prior art.

### SUMMARY

An objective of embodiments of the present application is: to provide a battery cell, a battery, and an electrical device are provided, solving problems in the related art including but not limited to a problem that a battery cell is difficult to meet the loading requirements of the batteries of some sizes due to the limitation of the shape and the size of the battery cell.

An embodiment of the present application adopts the technical solutions below:
According to a first aspect, a battery cell is provided. The battery cell comprises a casing, an electrode assembly, a first electrode terminal and a second electrode terminal. The electrode assembly is arranged inside the casing. The first electrode terminal is electrically connected to the electrode assembly. The second electrode terminal is electrically connected to the electrode assembly, and the first electrode terminal and the second electrode terminal have different polarities for outputting or inputting electrical energy. The casing is of a prismatic structure, the casing has a first side wall and a second side wall arranged opposite to each other in an axial direction, the first side wall and the second side wall are square, and at least one of the first electrode terminal and the second electrode terminal is arranged on the first side wall or the second side wall.

According to the battery cell in embodiments of this application, during use, an external electronic device is electrically connected to the first electrode terminal and the second electrode terminal to form a circuit loop, and the electrode assembly in the casing undergoes an electrochemical reaction, thereby implementing input and output of electrical energy for a battery cell. The casing is of the prism structure, and the first side wall and the second side wall of the casing arranged along the axial direction are square. Thus, the casing is of the prismatic structure, a shape of a battery cell is square, and battery cells can be flexibly grouped, thereby meeting placement requirements of most cases, and also enabling better utilization of the space in a case, improving a volumetric energy density of a battery. In addition, in a process of grouping battery cells, it is not necessary to distinguish the length and width directions of the battery cells, facilitating improvement of assembly efficiency for the battery cells.

In some embodiments, the first electrode terminal and the second electrode terminal are arranged on the first side wall, and an angle between each of arrangement directions of the first electrode terminal and the second electrode terminal and a length direction of the first side wall is α, where 0°≤α≤45°.

By adopting the technical solution of the embodiment, since 0°≤α≤45° and the first side wall is square, the length direction of the first side wall may also be referred to as the width direction of the first side wall, so that the first electrode terminal and the second electrode terminal may be flexibly arranged on the first side wall to meet different battery cell requirements. In addition, the first electrode terminal and the second electrode terminal are both arranged on the first side wall, which can facilitate an electrical connection between a battery cell and the busbar component.

In some embodiments, the first electrode terminal and the second electrode terminal are respectively located at two opposite corners of the first side wall.

By adopting the technical solution of the embodiment, a distance between the first electrode terminal and the second electrode terminal is far, so that a large pressure relief mechanism or a plurality of pressure relief mechanisms, such as double pressure relief mechanisms, can be arranged between the first electrode terminal and the second electrode terminal, thereby improving a pressure relief effect and improving reliability of a battery in use. In addition, a distance between the pressure relief mechanism and the first electrode terminal or the second electrode terminal may also be set to be larger, which may also reduce an influence of emissions released by the pressure relief mechanism on the electrode terminals and the busbar component and improve reliability of a battery during use. In addition, in a process of grouping a plurality of battery cells, first electrode terminals or second electrode terminals may also be collectively arranged at adjacent corners of adjacent battery cells to facilitate electrical connection between battery cells and a busbar component.

In some embodiments, the first electrode terminal and the second electrode terminal are arranged on the first side wall, and the first side wall is provided with at least one pressure relief mechanism for releasing emissions; and/or, the second side wall is provided with at least one pressure relief mechanism for releasing emissions.

By adopting the technical solution of the embodiment, the position of the pressure relief mechanism may be flexibly set to meet different use requirements.

In some embodiments, the pressure relief mechanism includes a circular pressure relief mechanism.

By adopting the technical solution of the embodiment, after a plurality of battery cells are grouped, the circular pressure relief mechanism does not change due to different placement manners of the battery cells. A uniformity of a position of the circular pressure relief mechanism is good, facilitating a reduction in difficulty for designing a pressure relief channel communicating with a pressure relief mechanism subsequently.

In some embodiments, the electrode assembly is a flat structure.

By adopting the technical solution of the embodiment, the electrode assembly is of a flat structure, but the casing body of the battery cell is prismatic, and the shape of the battery cell is square, thereby meeting placement requirements of most cases, and also enabling better utilization of the space in a case, improving a volumetric energy density of a battery In addition, in a process of assembling battery cells into a battery, it is not necessary to distinguish the length and width directions of the battery cells, facilitating improvement of assembly efficiency for the battery cells.

In some embodiments, the casing further has a third side wall and a fourth side wall parallel to the axial direction and adjacent to each other, a surface of the electrode assembly with a largest area is a large surface, the third side wall is arranged opposite to the big surface, and a thickness of the third side wall is greater than a thickness of the fourth side wall.

By adopting the technical solution of the embodiment, during charging and discharging of a battery cell, the large surface of the battery assembly expands most obviously, and the large surface of the battery assembly is opposite to the third side wall, so that the third side wall can limit the expansion of the battery assembly, and the thickness of the third side wall is greater than the thickness of the fourth side wall, and the thickness of the third side wall is relatively thick, so that the effect of limiting the expansion of the battery assembly is better, facilitating improvement of use reliability of a battery cell.

In some embodiments, the casing includes a casing body and an end cap, the end cap covers an opening of the casing body, the end cap forms a first side wall, and a side wall of the casing body opposite to the end cap forms a second side wall. Alternatively, the end cap forms the second side wall, and the side wall of the casing body opposite the end cap forms the first side wall.

By adopting the technical solution of the embodiment, the structure of the casing body and the end cap is used for the casing, so that the electrode assembly can be loaded into the casing body from the opening of the casing body, and then the end cap covers the opening of the casing body, the operation of loading the electrode assembly into the casing body is simple and the assembling is convenient.

In a second aspect, a battery is provided, including at least one battery cell provided in any one of the above embodiments.

For the battery in embodiments of this application, the foregoing battery cells are used, so that the battery cells can be grouped more flexibly to meet use requirements of batteries of different sizes, and this also facilitates improvement of a volumetric energy density of a battery and improving assembly efficiency of a battery.

In some embodiments, the battery unit includes at least one layer of battery cells, each layer of battery cells includes a plurality of battery cells arranged in a matrix in a first direction and a second direction, and the first direction is perpendicular to the second direction.

By adopting the technical solution of the embodiment, the plurality of battery cells are arranged in a matrix along the first direction and the second direction, and the battery cells are prismatic, so that a relatively regular battery unit can be formed without distinguishing directions for grouping battery units during assembly, and assembly efficiency is higher.

In some embodiments, the first electrode terminal and the second electrode terminal are arranged on the first side wall, the first side wall is perpendicular to a third direction, in the same layer of the battery cells, all the first side walls are located on the same side of a corresponding layer of the battery cells, and the first direction and the second direction are perpendicular to the third direction.

By adopting the technical solution of the embodiment, the first electrode terminals and the second electrode terminals of all the battery cells are located on the same side of a corresponding layer of battery cells, so that the first electrode terminals and the second electrode terminals can be exposed outside the corresponding layer of battery cells, which facilitates the connection between the first electrode terminals and the second electrode terminals and the busbar component, and facilitates the electrical connection between the battery cells.

In some embodiments, the first electrode terminal and the second electrode terminal are arranged on the first side wall, and the first side wall is perpendicular to the first direction.

By adopting the technical solution of the embodiment, the first electrode terminal and the second electrode terminal are arranged on one side of the battery cell in the second direction, facilitating an arrangement of multiple layers of battery cells.

In some embodiments, in the same layer of the battery cells, every two adjacent columns of battery cells arranged in the second direction form a battery pack. In the same battery pack, first side walls of two battery cells arranged in the first direction are arranged opposite to or facing each other.

By adopting the technical solution of the embodiment, in the same layer of battery cells, first side walls of two columns of battery cells can be arranged to face each other, so that first electrode terminals and second electrode terminals of the two columns of battery cells can be arranged to face each other, a busbar component can be connected to the two columns of battery cells at the same time, and in addition, a gap between the two columns of battery cells can also be reduced, thereby improving structural compactness of a battery.

In some embodiments, arrangement directions of first electrode terminals and second electrode terminals of two adjacent battery cells are perpendicular or parallel to each other.

By adopting the technical solution of the embodiment, positions of electrode terminals can be flexibly distributed to meet different use requirements.

In some embodiments, corners of four adjacent battery cells adjacent to each other are each provided with the first electrode terminal or the second electrode terminal.

By adopting the technical solution of the embodiment, the first electrode terminals or the second electrode terminals are arranged at the corners of the four adjacent battery cells, so that electrode terminals with the same polarity are distributed in a concentrated manner, which can facilitate connection between the first electrode terminals or the second electrode terminals and the busbar component.

In some embodiments, a venting member having a venting channel is provided between two adjacent columns of battery cells, a pressure relief mechanism for releasing emissions is arranged on a side wall of a battery cell adjacent to the venting member, and the pressure relief mechanism is in communication with the venting channel to guide the emissions to be discharged.

By adopting the technical solution of the embodiment, the emissions released by the pressure relief mechanism can flow out of a battery unit through the venting channel of the venting member, thereby reducing a risk of the emissions contacting a battery cell and facilitating improvement of use reliability of a battery.

In some embodiments, at least one of the battery cells in the battery unit is a first battery cell, at least one of the battery cells in the battery unit is a second battery cell, and an electrode assembly in the first battery cell is arranged perpendicular to an electrode assembly in the second battery cell.

By adopting the technical solution of the embodiment, the electrode assembly of the first battery cell and the electrode assembly of the second battery cell are perpendicular, so that an expansion force of the electrode assembly of the first battery cell is vertically staggered with an expansion force of and a heat conduction direction for the electrode assembly of the second battery cell, thereby reducing an accumulated expansion force for the battery cells, degrading heat transfer between the battery cells, facilitating a reduction in thicknesses of an end plate and a heat insulation pad, and reducing manufacturing costs of a battery. In addition, the casing of the battery cell is of a prismatic structure. For the battery cell, it is not needed to distinguish between length and width directions, thereby facilitating a vertical distribution of the electrode assemblies in the first battery cell and the second battery cell and also facilitating battery cells to form a battery unit with a regular shape to meet use requirements of different batteries.

In some embodiments, the electrode assembly is of a flat structure, a surface with the largest area of the electrode assembly is a large surface; a large surface of the first battery cell is perpendicular to a large surface of the second battery cell.

By adopting the technical solution of the embodiment, expansion at the large surface is the most obvious, and the large surface of the first battery cell is perpendicular to the large surface of the second battery cell, which can better reduce an accumulated expansion force for battery cells, and in addition, the large surface has a large area, a heat-transfer area is large, and heat transfer is the fastest, which can also better degrade heat transfer between battery cells.

In some embodiments, the first battery cell includes at least two stacked electrode assemblies, the second battery cell includes at least two stacked electrode assemblies, and a stacking direction of the electrode assemblies of the first battery cell is perpendicular to a stacking direction of the electrode assemblies of the second battery cell.

By adopting the technical solution of the embodiment, an expansion of an electrode assembly in the stacking direction is the most obvious, and the stacking direction of the electrode assembly of the first battery cell is perpendicular to the stacking direction of the electrode assembly of the second battery cell, which can better reduce an accumulated expansion force for battery cells, and in addition, heat transfer for the electrode assembly is mainly along the stacking direction, which can also better degrade heat transfer between battery cells.

In some embodiments, the plurality of battery cells in the first direction include a first battery cell and a second battery cell; and/or the plurality of battery cells in the second direction include a first battery cell and a second battery cell.

By adopting the technical solution of the embodiment, an accumulated expansion force and heat transfer for a battery unit in the first direction and/or the second direction can be degraded.

In some embodiments, the plurality of battery cells in the first direction include the first battery cell and the second battery cell, the plurality of battery cells in the second direction include the first battery cell and the second battery cell, the first battery cell and the second battery cell in the first direction are alternately arranged, and the first battery cell and the first battery cell in the second direction are alternately arranged.

By adopting the technical solution of the embodiment, the first battery cells and the second battery cells are alternately arranged at intervals in the first direction and the second direction, which can better reduce an accumulated expansion force and heat transfer for the battery unit in the first direction and the second direction.

In some embodiments, the battery unit includes a plurality of layers of battery cells, the plurality of layers of battery cells are stacked in a third direction, the plurality of battery cells arranged in the third direction include a first battery cell and a second battery cell, and the first direction and the second direction are perpendicular to the third direction.

In some embodiments, the first battery cell and the second battery cell in the third direction are alternately arranged.

By adopting the technical solution of the embodiment, the first battery cells and the second battery cells are alternately arranged at intervals in the third direction, which can better reduce an accumulated expansion force and heat transfer for the battery unit in the first direction and the second direction. In addition, the first battery cells and the second battery cells are alternately distributed in the third direction, so that no expansion space needs to be reserved between two adjacent layers of battery cells, thereby facilitating an implementation of a stacking mode of three or more layers of battery cells.

A third aspect provides an electrical device, including the battery in the embodiments as described above.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To describe technical solutions in embodiments of the present application more clearly, the following briefly describes the accompanying drawings for describing the embodiments or the conventional technology. It is clear that the accompanying drawings described in the following are merely some embodiments of the present application. Those of ordinary skill in the art can still derive other accompanying drawings from these accompanying drawings without creative efforts.
FIG. 1 is a schematic structural diagram of a vehicle according to some embodiments of the present application.
FIG. 2 is a schematic diagram of an exploded structure of a battery according to some embodiments of the present application;
FIG. 3 is a schematic structural diagram of a battery cell according to some embodiments of the present application;
FIG. 4 is a schematic exploded diagram of the battery cell shown in FIG. 3;
FIG. 5 is a schematic structural diagram of a battery cell according to some embodiments of the present application;
FIG. 6 is a schematic structural diagram of a battery cell according to some embodiments of the present application;
FIG. 7 is a schematic structural diagram of a battery cell according to some embodiments of the present application;
FIG. 8 is a schematic structural diagram of a battery cell according to some embodiments of the present application;
FIG. 9 is a sectional view taken along line A-A in FIG. 8;
FIG. 10 is a sectional view taken along line B-B in FIG. 8;
FIG. 11 is a schematic structural diagram of a battery unit according to some embodiments of the present application;
FIG. 12 is a schematic diagram of an exploded structure of a battery device provided in some embodiments of the present application;
FIG. 13 is a schematic diagram of an exploded structure of a battery device provided in some embodiments of the present application;
FIG. 14 is a schematic diagram of an exploded structure of a battery device provided in some embodiments of the present application;
FIG. 15 is a partially enlarged view of C in FIG. 11;
FIG. 16 is a partial enlarged view of C in FIG. 11 of a battery unit according to some embodiments of the present application;
FIG. 17 is a partial enlarged view of C in FIG. 11 of a battery unit according to some embodiments of the present application;
FIG. 18 is a partially enlarged view of D in FIG. 14;
FIG. 19 is a partial enlarged arrangement view of C in FIG. 11 of an electrode assembly in a battery unit according to some embodiments of the present application;
FIG. 20 is an arrangement view of an electrode assembly in a battery unit according to some embodiments of the present application;
FIG. 21 is an arrangement view of an electrode assembly in a battery unit according to some embodiments of the present application;
FIG. 22 is an arrangement view of an electrode assembly in a battery unit according to some embodiments of the present application;
FIG. 23 is an arrangement view of an electrode assembly in a battery unit according to some embodiments of the present application;
FIG. 24 is an arrangement view of an electrode assembly in a battery unit according to some embodiments of the present application; and
FIG. 25 is an arrangement view of an electrode assembly in a battery unit according to some embodiments of the present application.

In which, reference numerals in the figures:
1000: vehicle; 1100: battery; 1101: battery unit; 1200: controller; 1300: motor; 100: battery cell; 1001: first battery cell; 1002: second battery cell; 1003: battery pack; 1004: first battery subunit; 1005: second battery subunit; 1006: third battery subunit; 1007: fourth battery subunit; 1008: fifth battery subunit; 1009: sixth battery subunit; 110: casing; 111: casing body; 112: end cap; 113: first side wall; 114: second side wall; 115: third side wall; 116: fourth side wall; 120: electrode assembly; 121: large surface; 131: first electrode terminal; 132: second electrode terminal; 140: pressure relief mechanism; 200: case; 210: first portion; 220: second portion; 300: venting member: 310: venting channel; 320: through hole; 400: structural beam; 500: buffer member; 600: heat exchanger.

### DETAILED DESCRIPTION OF PREFERRED EMBODIMENTS

In order to make the technical problem to be solved, technical solution and beneficial effect of the present application clearer, the present application will be further described in detail below with reference to the figures and embodiments. It should be understood that the specific embodiments described herein are only used to explain the present application and are not used to limit the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. Thus, a feature defined by "first" and "second" may explicitly or implicitly indicates that the feature is singular or plural.

Reference to "an embodiment" herein means that a particular feature, structure, or characteristic described with reference to the embodiment can be included in at least some embodiments of the present application. The phrase in various places in the description does not necessarily all refer to the same embodiment, or a separate or alternative embodiment mutually exclusive of other embodiments. It is explicitly and implicitly understood by those skilled in the art that the embodiments described hereinmay be combined withother embodiments in any suitable manner.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces). "Several" means one or more unless specifically defined otherwise.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

In the description of the embodiment of the present application, unless explicitly specified and defined otherwise, when an element is referred to as being "fixed on" or "disposed on" another element, it may be directly or indirectly on another element. When an element is referred to as being "connected to" another element, it can be directly or indirectly connected to another element.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of traction batteries continues to expand, a market demand for traction batteries continues to increase.

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

The battery usually includes a case and a plurality of battery cells, and the plurality of battery cells are placed in the case. However, in some cases, the battery cells are of a flat structure, for example, a square casing battery cell. A length of the battery cell is greater than a width of the battery cell, so that battery cells are grouped through a single manner in a case, resulting in a large free space in the case, which limits improvement of a volumetric energy density of a battery, and thus it is difficult to meet placement requirements of cases of some sizes.

Based on this, embodiments of the present application provide a battery cell. A casing of the battery cell is of a prismatic structure. A first side wall and a second side wall of the casing along an axial direction thereof are square. The casing of the battery cell is of a prismatic shape, and the shape of the casing is square. Battery cells can be flexibly grouped, thereby meeting the placement requirements of most cases, and also enabling better utilization of the space in a case, improving the volumetric energy density of the battery.

The technical solutions described in the embodiments of the present application are all applicable to various electrical devices using batteries.

Batteries are widely used in various electronic devices, including mobile phones, notebook computers, electric bicycles, electric vehicles, electric airplanes, electric ships, electric toy cars, electric toy ships, electric toy airplanes, electric tools, etc. The battery is a device that can store and release electrical energy and provide required power for these electronic devices. The battery may be an energy storage device. The energy storage device includes an energy storage container, an energy storage cabinet, and the like.

The electrical device may be a vehicle, a mobile phone, a portable device, a notebook computer, a ship, a spacecraft, an electric toy, an electric tool, and the like. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

To facilitate the description, in the following embodiments, as an example for description, an electrical device in an embodiment of the present application is a vehicle.

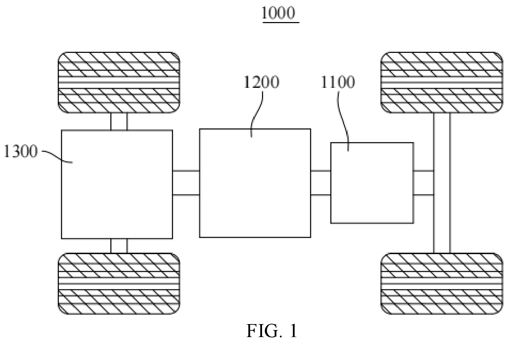

Referring to FIG. 1, the vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 1100 is provided, which may be provided at the bottom, head, or tail of the vehicle 1000. The battery 1100 may be configured to power the vehicle 1000. For example, the battery 1100 may be used as an operating power source of the vehicle 1000. The vehicle 1000 may further include a controller 1200 and a motor 1300, where the controller 1200 is configured to control the battery 1100 to power the motor 1300, for example, for a working power requirement of the vehicle 1000 during starting, navigating, and driving.

In some embodiments of the present application, the battery 1100 may be used not only as the operating power source of the vehicle 1000, but also as a driving power source of the vehicle 1000, instead of or partially instead of fuel or natural gas to provide driving power for the vehicle 1000.

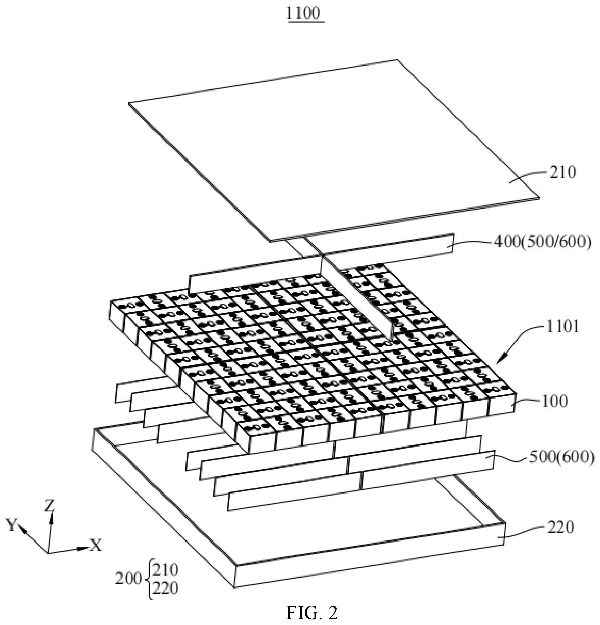

Referring to FIG. 2, as an embodiment of the battery 1100, the battery 1100 includes a case 200 and a battery unit 1101. The battery unit 1101 is accommodated in the case 200. Here, the case 200 is configured to provide an accommodating space for the battery unit 1101, and the case 200 may adopt multiple structures. In some embodiments, the case 200 may include a first portion 210 and a second part 220, where the first portion 210 and the second portion 220 fit to each other to define an accommodation space for accommodating the battery unit 1101. The second portion 220 may be of a hollow structure with an opening at one end, the first portion 210 may be of a plate-shaped structure, and the first portion 210 covers an opening side of the second portion 220, such that the first portion 210 and the second portion 220 jointly define the accommodating space. The first portion 210 and the second portion 220 may each be of a hollow structure with an opening in one side, with the opening side of the first portion 210 covering the opening side of the second portion 220. Certainly, the case 200 formed by the first portion 210 and the second portion 220 may be in various shapes such as a cylinder and a cuboid.

In the battery 1100, the battery unit 1101 may include a plurality of battery cells 100, and the plurality of battery cells 100 may be subjected to series connection, parallel connection, or series-parallel connection. The series-parallel connection means that the plurality of battery cells 100 are subjected to both series connection and parallel connection.

In some embodiments, the plurality of battery cells 100 may be directly connected in series, in parallel, or in a combination of both, and the whole of the plurality of battery cells 100 is accommodated in the case 200. Certainly, the battery 1100 may also be formed in a manner that a plurality of battery cells 100 are subjected to series connection, parallel connection, or series-parallel connection to form battery modules, and the plurality of battery modules are then subjected to series connection, parallel connection, or series-parallel connection to form an integrated unit, which is accommodated in the case 200. The battery 1100 may further include other structures. For example, the battery 1100 may further include a busbar component for implementing an electrical connection between the plurality of battery cells 100.

In some embodiments, the battery cell 100 refers to a minimum unit constituting the battery 1100. The battery cell 100 may include a lithium-ion secondary battery 1100, a lithium-ion primary battery 1100, a lithium-sulfur battery 1100, a sodium lithium-ion battery 1100, a sodium ion battery 1100, a lithium metal battery 1100 or a magnesium ion battery 1100, or the like, which is not limited in embodiments of the present application.

In some embodiments, structural beams 400 are further arranged in the case 200 to increase structural strength of the case 200 and use reliability of the battery 1100. The structural beams 400 may be arranged between two adjacent batteries 1100 or may be arranged on side portions of the battery units 1101. A plurality of structural beams 400 are provided, and the plurality of structural beams 400 may be arranged at intervals or may be arranged in a cross manner. The structural beam 400 may be arranged between two adjacent batteries 1100, so that battery cells 100 may be separated to improve safety for the battery cells 100. The structural beam 400 may not be arranged in the case 200, and for the battery cells 100, the battery units 1101 are formed into a whole unity by glue filling or bottom glue, so that the structural beam 400 is eliminated.

In some embodiments, the battery 1100 further includes a buffer member 500, the buffer member 500 is located between two adjacent battery cells 100, and the buffer member 500 has elasticity and can relieve stress and vibration between the battery cells 100 and improve reliability and stability of the battery 1100. The buffer member 500 may be made of a plastic material such as polyethylene or polypropylene.

In some embodiments, the battery 1100 further includes a heat exchanger 600, and the heat exchanger 600 is configured to exchange heat with the battery cell 100, so as to control the battery cell 100 to be charged and discharged within a suitable temperature, thereby improving the reliability and stability of the battery 1100. The heat exchanger 600 may be located between two adjacent battery cells 100, or may be located on an upper side or a lower side of the battery cell 100, to implement heat exchange for a top surface or a bottom surface of the battery cell 100. A flow channel for a heat exchange medium to flow may be provided in the heat exchanger 600, and the heat exchange medium exchanges heat with the battery cell 100 in the process of flowing in the flow channel, thereby realizing temperature control for the battery cell 100, and the heat exchange medium may be cooling liquid, water, air, or the like. The heat exchanger 600 may also be an electric heating rod, an electric cooling member, or the like.

In some embodiments, the battery 1100 may not include the case 200, but a plurality of battery cells 100 are electrically connected and, after being integrated by a necessary fixing structure, assembled into an electrical device.

Referring to FIG. 2, the battery 1100 has a height direction, a length direction, and a width direction, for the height direction of the battery 1100, reference may be made to the Z direction in the figure, for the width direction of the battery 1100, reference may be made to the Y direction in the figure, and for the length direction of the battery 1100, reference may be made to the X direction in the figure. The case 200 defines an appearance structure of the battery 1100, a height direction of the case 200 may be the height direction of the battery 1100, a length direction of the case 200 is the length direction of the battery 1100, and a width direction of the case 200 is the width direction of the battery 1100.

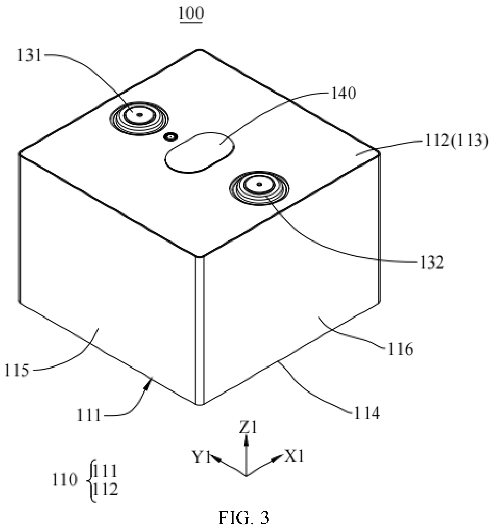

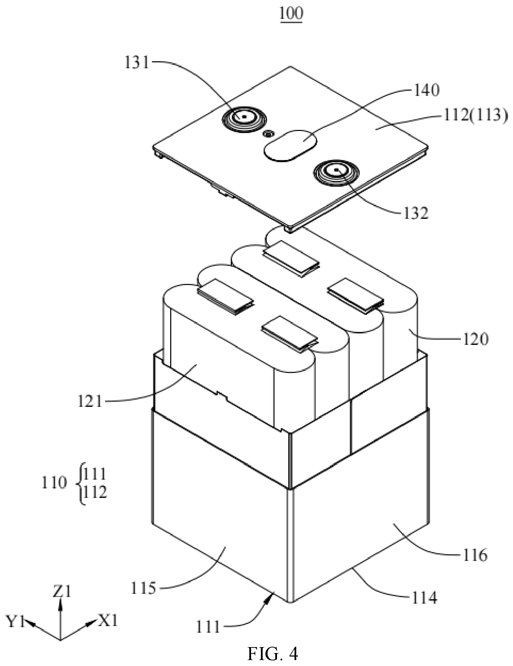

In some embodiments of the present application, referring to FIG.3 and 4, a battery cell 100 is provided. The battery cell 100 includes a casing 110, an electrode assembly 120, a first electrode terminal 131, and a second electrode terminal 132.

The electrode assembly 120 is arranged in the casing 110. The first electrode terminal 131 is electrically connected to the electrode assembly 120. The second electrode terminal 132 is electrically connected to the electrode assembly 120, and the first electrode terminal 131 and the second electrode terminal 132 have different polarities for outputting or inputting electrical energy. The casing 110 is of a prismatic structure, the casing 110 has a first side wall 113 and a second side wall 114 arranged opposite to each other in an axial direction, the first side wall 113 and the second side wall 114 are square, and at least one of the first electrode terminal 131 and the second electrode terminal 132 is arranged on the first side wall 113 or the second side wall 114.

The casing 110 refers to a structure of a casing body 111 having a space therein to accommodate and protect an electrode assembly 120. The casing 110 may be made of a material having specific hardness and strength, such that the casing 110 is not likely to deform when subjected to compression and impact, enabling the battery cell 100 to have higher structural strength and improved reliability. The casing 110 may be made of various materials, including but not limited to copper, iron, aluminum, stainless steel, an aluminum alloy, plastic, and the like.

The casing 110 is in a shape of a prism. One of two side walls of the casing 110 distributed oppositely along the axial direction is a first side wall 113, the other side wall is a second side wall 114, and a shape of the first side wall 113 and a shape of the second side wall 114 are squares, so that the casing 110 is of a prismatic structure.

For example, to reduce edges of the casing 110, the edges of the casing 110 are usually rounded or chamfered, so that corner edges of the first side wall 113 are linear or arc-shaped, and in this case, the shape of the first side wall 113 may also be referred to as a square. Similarly, to reduce edges of the casing 110, the edges of the casing 110 are usually rounded or chamfered, so that corner edges of the second side wall 114 are linear or arc-shaped, and in this case, the shape of the second side wall 114 may also be referred to as a square.

For example, during manufacturing of the casing 110, due to manufacturing errors, a width of the first side wall 113 may be equal to or approximately equal to a length of the first side wall 113. Thus, when a numerical range of a ratio of the width of the first side wall 113 to the length of the first side wall 113 is 0.9 to 1.1, the shape of the first side wall 113 may also be referred to as a square. Similarly, when the numerical range of the ratio of the width of the second side wall 114 to the length of the second side wall 114 is 0.9 to 1.1, the shape of the second side wall 114 may also be referred to as a square.

Referring to FIG. 3, the battery cell 100 has a height direction, a width direction, and a length direction. For the height direction of the battery cell 100, reference may be made to a Z1 direction in the figure, for the width direction of the battery cell 100, reference may be made to an X1 direction in the figure, and for the length direction of the battery cell 100, reference may be made to a Y1 direction in the figure. The casing 110 defines an appearance structure of the battery cell 100. A height direction of the casing 110 may be the height direction of the battery cell 100, a length direction of the casing 110 is the length direction of the battery cell 100, and a width direction of the casing 110 is the width direction of the battery cell 100. For the axial direction of the casing 110, reference may be made to the Z1 direction in the figure. The first side wall 113 and the second side wall 114 respectively refer to upper and lower side walls of the battery cell 100. The first side wall 113 and the second side wall 114 are square. In other words, the width of the first side wall 113 is equal to or approximately equal to the length of the first side wall 113, the width of the first side wall 113 may also be referred to as the length of the first side wall 113, the length of the first side wall 113 may also be referred to as the width of the first side wall 113, a width direction of the first side wall 113 may also be referred to as a length direction of the first side wall 113, and the length direction of the first side wall 113 may also be referred to as the width direction of the first side wall 113. The width of the first side wall 113 may be the width of the battery cell 100, and the length of the first side wall 113 may be the length of the battery cell 100. Similarly, the width of the second side wall 114 is equal to or approximately equal to the length of the second side wall 114, the width of the second side wall 114 may also be referred to as the length of the second side wall 114, the length of the second side wall 114 may also be referred to as the width of the second side wall 114, a width direction of the second side wall 114 may also be referred to as a length direction of the second side wall 114, and the length direction of the second side wall 114 may also be referred to as the width direction of the second side wall 114. The width of the second side wall 114 may be the width of the battery cell 100, and the length of the second side wall 114 may be the length of the battery cell 100.

The electrode assembly 120 is a component in the battery cell 100 in which an electrochemical reaction occurs. The casing 110 may include one or more electrode assemblies 120. The electrode assembly 120 is composed of a positive electrode sheet, a negative electrode sheet, and a separator. Working of the battery cell 100 mainly relies on migration of metal ions between the positive electrode sheet and the negative electrode sheet. The positive electrode sheet includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is used as a positive electrode tab.

A lithium-ion battery 1100 is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer, and the negative electrode current collector not coated with the negative electrode active material layer is used as a negative electrode tab. The negative electrode current collector may be made of copper, and a negative electrode active substance may be carbon, silicon, a lithium metal or a lithium alloy, or the like. To ensure that a large current passes through without any fusing, a plurality of positive tabs are provided and stacked together, and a plurality of negative tabs are provided and stacked together. The separator may be made of polypropylene (PP), polyethylene (PE), or the like. In addition, the electrode assembly 120 in the embodiments of the present application includes, but is not limited to, a winding type structure or a stacking type structure.

An electrode terminal refers to a conductive member arranged on the casing 110. The electrode terminal is connected to the tab of the electrode assembly 120 to output electric energy of the battery cell 100 or charge the battery cell 100. Generally, two electrode terminals of the battery cell 100 exist. The two electrode terminals are respectively connected to a positive electrode tab and a negative electrode tab of the electrode assembly 120, the electrode terminal connected to the positive electrode tab is a positive electrode terminal, and the electrode terminal connected to the negative electrode tab is a negative electrode terminal. The positive electrode terminal and the negative electrode terminal may be connected to a busbar component for realizing electrical connection between the plurality of battery cells 100. One of the first electrode terminal 131 and the second electrode terminal 132 is the positive electrode terminal, and the other one is the negative electrode terminal.

At least one of the first electrode terminal 131 and the second electrode terminal 132 is arranged on the first side wall 113 or the second side wall 114. It can be understood that the first electrode terminal 131 is arranged on the first side wall 113 or the second side wall 114, and the second electrode terminal 132 is arranged on the first side wall 113 or the second side wall 114.

Referring to FIG. 3, FIG. 5, and FIG. 6, the first electrode terminal 131 is arranged on the first side wall 113, and the second electrode terminal 132 may be arranged on the first side wall 113, the second side wall 114, or a side wall adjacent to the first side wall 113. The first electrode terminal 131 is arranged on the second side wall 114, and the second electrode terminal 132 may be arranged on the first side wall 113, the second side wall 114, or a side wall adjacent to the first side wall 113. The second electrode terminal 132 is arranged on the first side wall 113, and the first electrode terminal 131 may be arranged on the first side wall 113, the second side wall 114, or a side wall adjacent to the first side wall 113. The second electrode terminal 132 is arranged on the second side wall 114, and the first electrode terminal 131 may be arranged on the first side wall 113, the second side wall 114, or a side wall adjacent to the first side wall 113.

According to the battery cell 100 in embodiments of this application, during use, an external electronic device is electrically connected to the first electrode terminal 131 and the second electrode terminal 132 to form a circuit loop, and the electrode assembly 120 in the casing 110 undergoes an electrochemical reaction, thereby implementing input and output of electrical energy for the battery cell 100. The casing 110 is of a prismatic structure, and the first side wall 113 and the second side wall 114 of the casing 110 arranged along the axial direction are square. In other words, the casing 110 is of a prismatic structure, the shape of the battery cell 100 is square, the battery cells 100 can be flexibly grouped, thereby meeting the placement requirements of most cases 200, and also enabling better utilization of the space in a case 200, improving the volumetric energy density of the battery 1100. In addition, in a process of grouping the battery cells 100, it is not necessary to distinguish the length and width directions of the battery cells 100, facilitating improvement of assembly efficiency for the battery cells 100.

When the battery cell 100 is charged, with an electric current, electrical energy is converted into chemical energy through a chemical reaction between an electrolyte and electrodes, and the chemical energy is stored in the battery cell 100. During discharging, the chemical energy is converted into electrical energy and released. This energy conversion process is accompanied by energy loss and heat generation, and if heat dissipation inside the battery cell 100 is poor, heat cannot be effectively dissipated, so that the battery cell 100 overheats. Certain internal resistance exists inside the battery cell 100, and a resistance loss occurs when a current passes through the internal resistance, resulting in heat generation inside the battery cell 100. When the current is too large or the internal resistance is too high, the heat generation inside the battery cell 100 is intensified, resulting in overheating of the battery cell 100. If a voltage of a battery cell 100 exceeds a designed maximum voltage thereof during charging, or the voltage of the battery cell 100 drops too low during discharging, the battery cell 100 may be over-voltage or over-discharge. Over charging or over discharging may cause loss of control of a chemical reaction inside the battery cell 100 and generate excessive heat, resulting in overheating of the battery cell 100. In addition, defects may exist in a design or manufacturing process for the battery cell 100, such as an improperly selected material, poor assembling of the battery cell 100, etc., and these defects may cause poor heat dissipation or uneven current distribution inside the battery cell 100, thereby increasing a risk of overheating or overvoltage of the battery cell 100. Thus, the battery cell 100 may be subjected to overheating or overvoltage during charging or use.

The battery cell 100 generally contains a certain amount of gas inside, and when the battery cell 100 is charged or discharged, a gas generation or absorption reaction may occur in a solution in the electrolyte. The generation of these gases may cause a gas pressure inside the battery cell 100 to rise, thereby causing the battery cell 100 to be swollen and deformed. During charging or discharging of the battery cell 100, the positive and negative electrode materials undergo chemical reactions to form new compounds. These chemical reactions are accompanied by a change in a volume, which causes a change in a volume of materials inside the battery cell 100, and the battery 1100 swells and deforms. When overcharging or over discharging of the battery cell 100, loss of control of a chemical reaction inside the battery cell 100 may be enabled, and excessive gas is generated or a structure of the electrode material is damaged, thereby causing the battery cell 100 to swell and deform. The battery cell 100 is charged or discharged in a high-temperature environment, which accelerates a progress of internal chemical reactions, increasing generated gas and a change in volume. The high temperature may also cause swelling of substances inside the battery cell 100, which also causes the battery cell 100 to swell and deform.

To reduce a risk of explosion or fire caused by overheating or over voltage of the battery cell 100 during charging or use, the casing 110 of the battery cell 100 is usually provided with a pressure relief mechanism 140, such as an explosion-proof valve or an explosion-proof sheet, so that when the temperature or pressure of the battery cell 100 exceeds a safety threshold, gases or liquids inside the battery cell 100 can be released to reduce the pressure inside the battery cell 100 and reduce the risk of explosion of the battery cell 100. In this way, safety performance of the battery cell 100 may be improved, reducing potential safety risks.

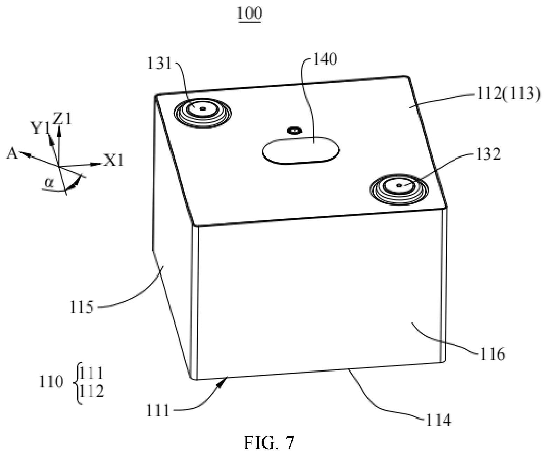

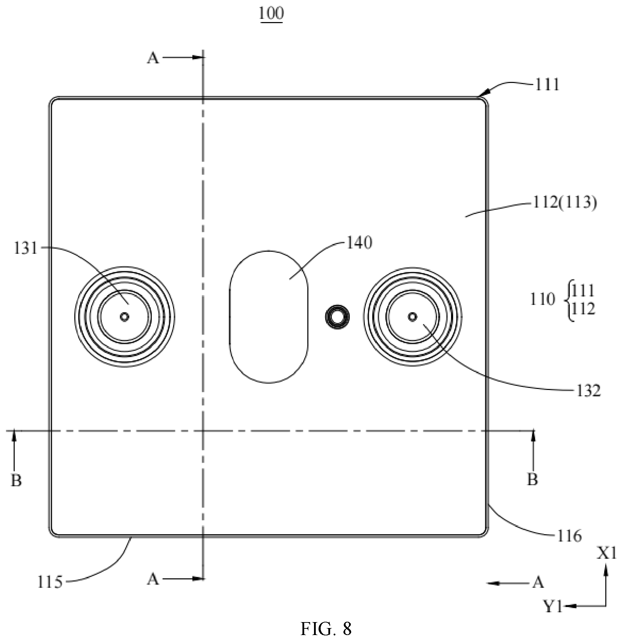

In some other embodiments of this application, referring to FIG. 7 and FIG. 8, the first electrode terminal 131 and the second electrode terminal 132 are arranged on the first side wall 113, and an angle between each of arrangement directions of the first electrode terminal 131 and the second electrode terminal 132 and a length direction of the first side wall 113 is α, where 0°≤α≤45°.

Here, it can be understood that the first electrode terminal 131 and the second electrode terminal 132 are arranged on the first side wall 113 at intervals, which can reduce a short-circuit risk. The arrangement directions of the first electrode terminal 131 and the second electrode terminal 132 may be parallel to a line connecting the center of the first electrode terminal 131 and the center of the second electrode terminal 132, and an angle formed by the line and the length direction of the first side wall 113 is α. For the arrangement directions of the first electrode terminal 131 and the second electrode terminal 132, reference may be made to a direction indicated by an arrow A in FIG. 7.

0°≤A≤45°, and it can be understood that a value of α may be 0°, 45°, or any value between 0° and 45°. For example, the value of α may be, but is not limited to, 0°, 5°, 10°, 15°, 20°, 25°, 30°, 35°, 40°, and 45°.

By adopting the technical solution of the embodiment, since 0°≤α≤45° and the first side wall 113 is square, the length direction of the first side wall 113 may also be referred to as the width direction of the first side wall 113, so that the first electrode terminal 131 and the second electrode terminal 132 may be flexibly arranged on the first side wall 113 to meet different requirements of the battery cell 100. In addition, the first electrode terminal 131 and the second electrode terminal 132 are both arranged on the first side wall 113, which can facilitate electrical connection between the battery cell 100 and the busbar component.

For example, referring to FIG. 8, the arrangement directions of the first electrode terminal 131 and the second electrode terminal 132 are parallel to the length direction of the first side wall 113 and located at a middle position in the width direction of the first side wall 113.

In some other embodiments of the present application, referring to FIG. 7, the first electrode terminal 131 and the second electrode terminal 132 are respectively located at two opposite corners of the first side wall 113.

Here, it may be understood that the first electrode terminal 131 and the second electrode terminal 132 are located at two corners of the first side wall 113 that are distributed along a diagonal line.

By adopting the technical solution of the embodiment, a distance between the first electrode terminal 131 and the second electrode terminal 132 is far, so that a large pressure relief mechanism 140 or a plurality of pressure relief mechanisms 140, such as double pressure relief mechanisms 140, can be provided between the first electrode terminal 131 and the second electrode terminal 132, thereby improving a pressure relief effect and improving reliability of the battery 1100 in use. In addition, a distance between the pressure relief mechanism 140 and the first electrode terminal 131 or the second electrode terminal 132 may also be set to be larger, which may also reduce an influence of emissions released by the pressure relief mechanism 140 on the electrode terminals and the busbar component, thereby improving reliability of the battery 1100 during use. In addition, in a process of grouping a plurality of battery cells 100, first electrode terminals 131 or second electrode terminals 132 may also be collectively arranged at adjacent corners of adjacent battery cells 100, to facilitate electrical connection between battery cells 100 and a busbar component.

In some other embodiments of the present application, referring to FIG. 7 and FIG. 8, the first electrode terminal 131 and the second electrode terminal 132 are arranged on the first side wall 113, and the first side wall 113 is provided with at least one pressure relief mechanism 140 configured to release emissions; and/or, the second side wall 114 is provided with at least one pressure relief mechanism 140 for releasing emissions.

In a possible implementation, the first electrode terminal 131, the second electrode terminal 132, and the at least one pressure relief mechanism 140 are arranged on the first side wall 113, so that the first electrode terminal 131, the second electrode terminal 132, and the pressure relief mechanism 140 can be mounted on the same side wall of the casing 110, and processing and manufacturing are simple. One or more pressure relief mechanisms 140 on the first side wall 113 may be provided, for example, two, three, or four.

In another possible implementation, the first electrode terminal 131 and the second electrode terminal 132 are arranged on the first side wall 113, and the at least one pressure relief mechanism 140 is arranged on the second side wall 114, so that the electrode terminal and the pressure relief mechanism 140 are respectively arranged on two opposite sides of the casing 110, which can reduce an influence of emissions discharged by the pressure relief mechanism 140 on the first electrode terminal 131 and the second electrode terminal 132 and facilitates improvement of use reliability of the battery cell 100. One or more pressure relief mechanisms 140 may be provided on the second side wall 114; for example, two, three, or four.

In another possible implementation, the first electrode terminal 131 and the second electrode terminal 132 are arranged on the first side wall 113, and the first side wall 113 and the second side wall 114 are both provided with at least one pressure relief mechanism 140, so that pressure relief can be performed on the battery cell 100 from two opposite sides, with many pressure relief portions and a good pressure relief effect, facilitating improvement of use reliability of the battery cell 100.

By adopting the technical solution of the embodiment, the position of the pressure relief mechanism 140 may be flexibly set to meet different use requirements.

In some embodiments, the pressure relief mechanism 140 may have a plurality of shapes, for example, a strip shape, a circular shape, or the like.

In some cases, after a plurality of battery cells 100 are grouped, due to a placement direction of the battery cells 100, elongated pressure relief mechanisms 140 of some battery cells 100 are vertically arranged, elongated pressure relief mechanisms 140 of some battery cells 100 are horizontally arranged, and the arrangement manners of the pressure relief mechanisms 140 are inconsistent, increasing difficulty for designing a pressure relief channel for communicating with the pressure relief mechanism 140 subsequently.

In some other embodiments of this application, referring to FIG. 7 and FIG. 8, the pressure relief mechanism 140 includes a circular pressure relief mechanism 140.

Here, it can be understood that the circular pressure relief mechanism 140 may mean that the pressure relief mechanism 140 is circular in shape.

By adopting the technical solution of the embodiment, after a plurality of battery cells 100 are grouped, the circular pressure relief mechanism 140 does not change due to different placement manners of the battery cells 100. A uniformity of a position of the circular pressure relief mechanism 140 is good, facilitating a reduction in difficulty for designing a pressure relief channel communicating with a pressure relief mechanism 140 subsequently.

In some other embodiments of this application, referring to FIG. 4, an electrode assembly 120 is a flat structure.

Here, it can be understood that the electrode assembly 120 is flat. Generally, the electrode assembly 120 is of a flat structure, and the casing 110 of the battery cell 100 is also of a flat structure, so that the length and width of the battery cell 100 are greatly different, and it is not easy for the battery cell 100 to meet placement requirements of cases 200 of some sizes.

Referring to FIG. 4, the electrode assembly 120 has a height direction, a width direction and a length direction, the height direction of the electrode assembly 120 may be parallel to a height direction of a battery cell 100, which may be referred to as the Z1 direction in the figure, the width direction of the electrode assembly 120 may be parallel to a width direction of the battery cell 100, which may be referred to as the X1 direction in the figure, and the length direction of the electrode assembly 120 may be parallel to a length direction of the battery cell 100, which may be referred to as the Y1 direction in the figure. Two end surfaces of the electrode assembly 120 along a height direction thereof are respectively a first end surface and a second end surface. In other words, the height of the electrode assembly 120 is defined between the first end surface and the second end surface. A surface of a side portion of the electrode assembly 120 in the height direction is a side surface of the electrode assembly 120. The side surfaces include two first side surfaces located at two ends of the electrode assembly 120 in the length direction and two second side surfaces located at two ends in the width direction. In other words, a distance between the two first side surfaces is a length of the electrode assembly 120, and a distance between the two second side surfaces is a width of the electrode assembly 120. Areas of the two end faces are defined by the length and width of the electrode assembly 120, an area of the first side surface is defined by the height and width of the electrode assembly 120, and an area of the second side surface is defined by the height and length of the electrode assembly 120. For the flat electrode assembly 120, its width is smaller than its length and height, and the area of its second side surface is the largest, so the second side surface is also referred to as a large surface 121, and the large surface 121 is also perpendicular to the first side wall 113 and the second side wall 114. A tab is led out from the first end surface, and the first electrode terminal 131 and the second electrode terminal 132 are located on a side of the electrode assembly 120 close to the first end surface.

By adopting the technical solution of the embodiment, the electrode assembly 120 is of a flat structure, but the casing body 111 of the battery cell 100 is of a quadrangular prism, and the shape of the battery cell 100 is square, thereby meeting placement requirements of most cases 200, and also enable better use of the space in a case 200, improving a volumetric energy density of a battery 1100. In addition, in a process of assembling battery cells 100 into a battery 1100, it is not necessary to distinguish the length and width directions of the battery cell 100, facilitating improvement of assembly efficiency for the battery cells 100.

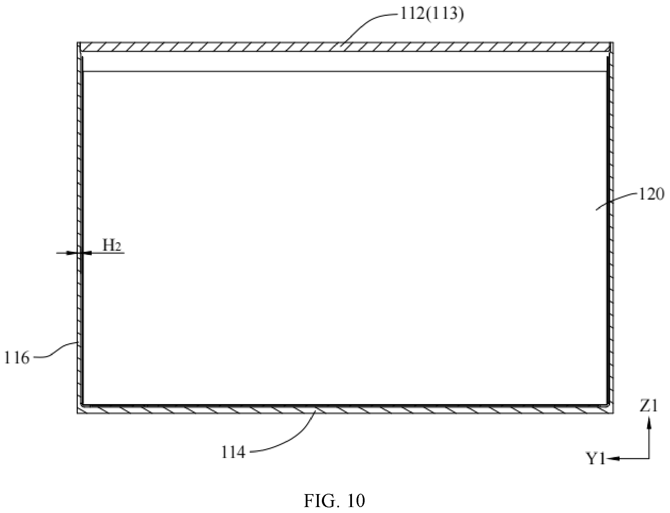

In some other embodiments of the present application, referring to FIGS. 8-10, the casing 110 further has a third side wall 115 and a fourth side wall 116 parallel to an axial direction and adjacent to each other, a largest surface of an electrode assembly 120 is a large surface 121, the third side wall 115 is arranged opposite to the large surface 121, and a thickness H₁ of the third side wall 115 is greater than a thickness H₂ of the fourth side wall 116.

Referring to FIG. 4, the first side wall 113 and the second side wall 114 define a height of a battery cell 100, two side walls located at both ends of the battery cell 100 in a length direction are both third side walls 115, two third side walls 115 define a length of the battery cell 100, two side walls located in a width direction of the battery cell 100 are both fourth side walls 116, and two fourth side walls 116 define a width of the battery cell 100. For the flat electrode assembly 120, its width is smaller than the length and the height, and the area of its second side surface is the largest, so the second side surface is also referred to as the large surface 121, side walls of the casing 110 located on opposite sides of the large surface 121 along a height direction of the electrode assembly 120 are the first side walls 113 and the second side wall 114, the large surface 121 is arranged opposite to the third side wall 115, and side walls located on opposite sides of the large surface 121 along a length direction of the electrode assembly 120 are the fourth side walls 116.

The thickness H₁ of the third side wall 115 may refer to a spacing between two opposite surfaces of the third side wall 115 along the width direction of the battery cell 100. The thickness H₂ of the fourth side wall 116 may refer to a spacing between two opposite surfaces of the fourth side wall 116 along the length direction of the battery cell 100.

By adopting the technical solution of the embodiment, during charging and discharging of the battery cell 100, the large surface 121 of the battery cell 120 expands most obviously, and the large surface 121 of the battery cell 120 is opposite to the third side wall 115, so that the third side wall 115 can limit the expansion of the battery cell 120, and the thickness H₁ of the third side wall 115 is greater than the thickness H₂ of the fourth side wall 116, and the thickness H₁ of the third side wall 115 is relatively large, so that the effect of limiting the expansion of the battery cell 120 is better, facilitating improvement of use reliability of the battery cell 100.

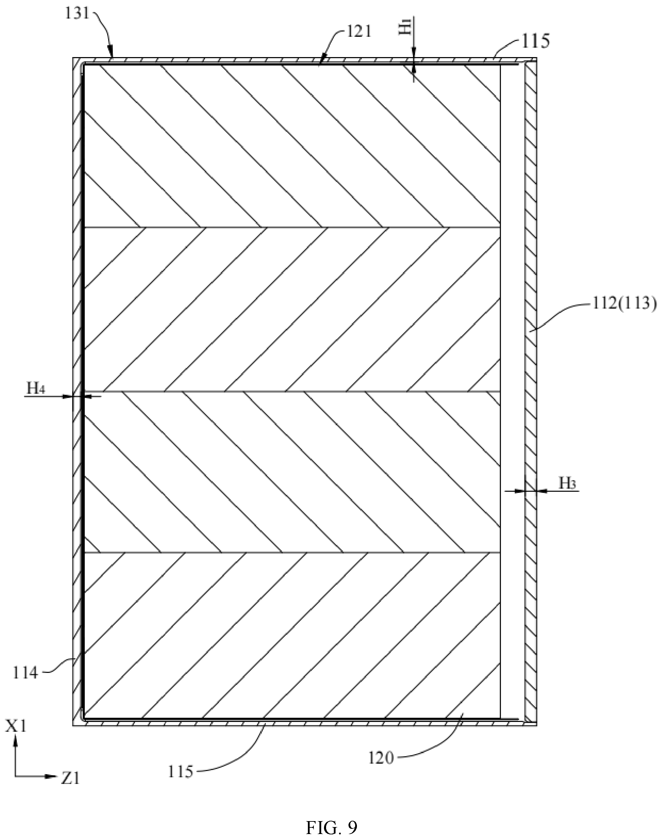

In some embodiments, referring to FIG. 9, a pressure relief mechanism 140 is arranged on a first side wall 113, a thickness H₃ of the first side wall 113 is greater than a thickness H₁ of a third side wall 115, the thickness H₃ of the first side wall 113 is relatively large, and the first side wall 113 is more easily connected to the pressure relief mechanism 140. For example, the pressure relief mechanism 140 is welded to the first side wall 113, and the thickness H₃ of the first side wall 113 is relatively large, so that the first side wall 113 is not easily perforated through welding, and it is easier to weld the pressure relief mechanism 140 to the first side wall 113. For example, the pressure relief mechanism 140 is manufactured on the first side wall 113 by indentation stamping or laser ablation, and the thickness H₃ of the first side wall 113 is relatively large, so that the first side wall 113 is not easily penetrated, and it is easier to implement indentation stamping or laser ablation of the pressure relief mechanism 140.

Similarly, the pressure relief mechanism 140 is arranged on a second side wall 114, a thickness H₄ of the second side wall 114 is greater than a thickness H₁ of a third side wall 115, the thickness H₄ of the second side wall 114 is relatively large, and the second side wall 114 is more easily connected to the pressure relief mechanism 140. For example, the pressure relief mechanism 140 is welded to the second side wall 114, and the thickness H₄ of the second side wall 114 is relatively large, so that the second side wall 114 is not easily perforated through welding, and it is easier to weld the pressure relief mechanism 140 to the second side wall 114. For example, the pressure relief mechanism 140 is manufactured on the second side wall 114 by indentation stamping or laser ablation, and the thickness H₄ of the second side wall 114 is relatively large, so that the second side wall 114 is not easily penetrated, and it is easier to implement indentation stamping or laser ablation of the pressure relief mechanism 140.

In some other embodiments of this application, referring to FIG. 4, a casing 110 includes a casing body 111 and an end cover 112, the end cap 112 covers an opening of the casing body 111, the end cap 112 forms a first side wall 113, and a side wall of the casing body 111 that is opposite to the end cap 112 forms a second side wall 114. Alternatively, the end cap 112 forms the second side wall 114, and the side wall of the casing body 111 opposite to the end cap 112 forms the first side wall 113.

The end cap 112 is a component that covers the opening of the casing body 111 to isolate the internal environment of the battery cell 100 from the external environment. Without limitation, the shape of the end cap 112 may adapt to the shape of the casing body 111 to fit the casing body 111. Optionally, the end cap 112 may be made of a material with certain hardness and strength (e.g., aluminum alloy). As such, the end cap 112 is less prone to deformation under compressive impact, thereby enabling the battery cell 100 to have higher structural strength and improved safety performance.

The end cap 112 may be made of various materials, such as copper, iron, aluminum, stainless steel, aluminum alloy, plastic, etc. The embodiments of the present application impose no special limitations thereto. In some embodiments, an insulation member may be further provided on an inner side of the end cap 112, and the insulation member may be used to isolate an electrical connection component in the casing body 111 from the end cap 112 to reduce the risk of a short circuit. For example, the insulation member may be plastic, rubber, etc.

The casing body 111 is an assembly for cooperating with the end cap 112 to form the internal environment of the battery cell 100, where the formed internal environment may be used to accommodate the electrode assembly 120. The casing body 111 and the end cap 112 may be separate components, and an opening may be provided in the casing body 111, and the inner environment of the battery cell 100 may be formed by closing the end cap 112 at the opening. Without limitation, the end cap 112 and the casing body 111 may also be integrated. Specifically, the end cap 112 and the casing body 111 may form a joint connection surface before other components are fitted into the casing, and then the end cap 112 is enabled to cover the casing body 111 when an interior of the casing body 111 needs to be encapsulated. The casing body 111 may be made of various materials, such as copper, iron, aluminum, stainless steel, aluminum alloy, plastic, and the like. This is not specially limited in the embodiments of the present application.

The end cap 112 forms the first side wall 113, and a side wall of the casing body 111 opposite to the end cap 112 forms the second side wall 114. It can be understood that the end cap 112 has a positive direction, and the casing body 111 has a prismatic shape.

The end cap 112 forms the second side wall 114, and the side wall of the casing body 111 opposite to the end cap 112 forms the first side wall 113, it can be understood that the end cap 112 has a positive direction, and the shape of the casing body 111 is a quadrangular prism. At least one of the first electrode terminal 131 and the second electrode terminal 132 is arranged on the end cap 112.

By adopting the technical solution of the embodiment, the structure of the shell 111 and the end cap 112 is used for the casing 110, so that the electrode assembly 120 can be loaded into the casing body 111 from an opening of the casing body 111, and then the end cap 112 covers the opening of the shell 111, and the operation of loading the electrode assembly 120 into the casing body is simple and the assembling is convenient.

The battery cell 100 in the embodiments of the present application will be described in conjunction with some embodiments.

### Embodiment 1

In the embodiment, referring to FIG. 3, FIG. 4, and FIG. 8 to FIG. 10, the battery cell 100 includes a casing 110, an electrode assembly 120, a first electrode terminal 131, and a second electrode terminal 132. The electrode assembly 120 is arranged in the casing 110. The first electrode terminal 131 is electrically connected to the electrode assembly 120. The second electrode terminal 132 is electrically connected to the electrode assembly 120, and the first electrode terminal 131 and the second electrode terminal 132 have different polarities for outputting or inputting electrical energy. The casing 110 is of a prismatic structure, the casing 110 has a first side wall 113 and a second side wall 114 arranged opposite to each other in an axial direction, the first side wall 113 and the second side wall 114 are square, and at least one of the first electrode terminal 131 and the second electrode terminal 132 is arranged on the first side wall 113 or the second side wall 114.

In the embodiment, the casing 110 includes a casing body 111 and an end cap 112, the end cap 112 covers an opening of the casing body 111, the end cap 112 forms a first side wall 113, and a side wall of the casing body 111 opposite to the end cap 112 forms a second side wall 114.

In the embodiment, the first electrode terminal 131 and the second electrode terminal 132 are arranged on the first side wall 113, and the first side wall 113 is provided with at least one pressure relief mechanism 140 for releasing emissions.

In the embodiment, the casing 110 further has a third side wall 115 and a fourth side wall 116 parallel to an axial direction and adjacent to each other, a largest surface of the electrode assembly 120 is a large surface 121, the third side wall 115 is arranged opposite to the large surface 121, and a thickness H₁ of the third side wall 115 is greater than a thickness H₂ of the fourth side wall 116.

In the embodiment, the electrode assembly 120 is a flat structure.

In the embodiment, the first electrode terminal 131 and the second electrode terminal 132 are arranged on the first side wall 113, and an angle between each of arrangement directions of the first electrode terminal 131 and the second electrode terminal 132 and a length direction of the first side wall 113 is α, where 0°≤α≤45°.

In the embodiment, α=0°, and the first electrode terminal 131 and the second electrode terminal 132 are located at middle positions of the first side wall 113 in a width direction.

### Embodiment 2

Embodiment 2 differs from Embodiment 1 in that: referring to FIG. 7, a first electrode terminal 131 and a second electrode terminal 132 are respectively located at two opposite corners of a first side wall 113.

### Embodiment 3

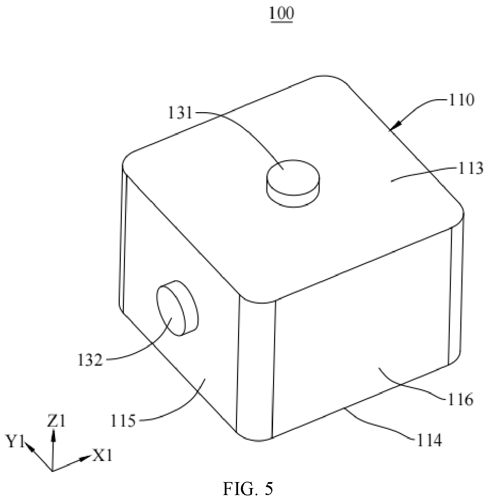

Embodiment 3 differs from Embodiment 1 in that: referring to FIG. 5, a first electrode terminal 131 is arranged on a first side wall 113, and a second electrode terminal 132 is arranged on a third side wall 115.

### Embodiment 4

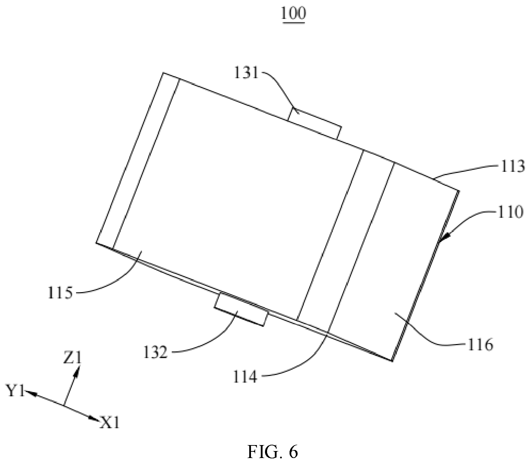

Embodiment 4 differs from Embodiment 1 in that: referring to FIG. 6, a first electrode terminal 131 is arranged on a first side wall 113, and a second electrode terminal 132 is arranged on a second side wall 114.

In another embodiment of the present application, as shown in FIG. 2, a battery 1100 is provided, including battery unit 1101, and the battery unit 1101 includes at least one battery cell 100 as described in the above embodiments.

For the battery 1100 in embodiments of the present application, the foregoing battery cells 100 are used, and the battery cells 100 are grouped more flexibly to meet use requirements of batteries 1100 of different sizes, and this also facilitates improvement of a volumetric energy density of the battery 1100 and improving assembly efficiency of the battery 1100.

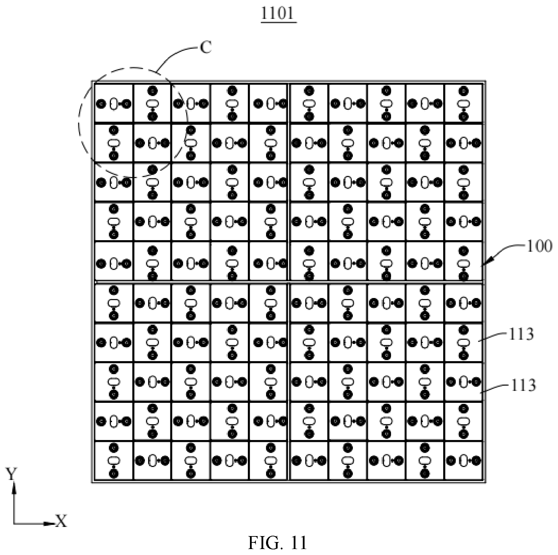

In some other embodiments of this application, referring to FIG. 11, the battery unit 1101 includes at least one layer of battery cells 100, each layer of battery cells 100 includes a plurality of battery cells 100 arranged in a matrix in a first direction and a second direction, and the first direction is perpendicular to the second direction.

The battery cell 100 including at least one layer of battery cells 100 may mean the battery unit 1101 including one or more layers of battery cells 100 which may be specifically selected based on a capacity and a size of a battery 1100 that are required by the battery 1100.

The plurality of battery cells 100 are arranged in a matrix along the first direction X and the second direction Y, and it can be understood that the plurality of battery cells 100 may be arranged in a plurality of rows, and a number of battery cells 100 in each row is the same. For example, the plurality of battery cells 100 arranged in the first direction are referred to as a row of battery cells 100. The plurality of battery cells 100 may also be arranged in a plurality of columns, and a number of battery cells 100 in each column is the same. For example, the plurality of battery cells 100 arranged in the second direction are referred to as a row of battery cells 100.

Referring to FIG. 2, the first direction may refer to a direction extending along a side of the case 200, and the second direction is perpendicular to the first direction, for example, for the first direction, reference can be made to the width direction of the battery 1100; and for the second direction, reference can be made to the length direction of the battery 1100.

By adopting the technical solution of the embodiment, the plurality of battery cells 100 are arranged in a matrix along the first direction and the second direction, and the battery cells 100 are prismatic, so that a relatively regular battery unit 1101 can be formed without distinguishing directions for grouping battery cells 100 during assembly, and assembly efficiency is higher.

In some other embodiments of this application, referring to FIG. 2 and FIG. 11, the first electrode terminal 131 and the second electrode terminal 132 are arranged on the first side wall 113, the first side wall 113 is perpendicular to a third direction. In the same layer of battery cells 100, all the first side walls 113 are located on the same side of a corresponding layer of battery cells 100. The first direction and the second direction are perpendicular to the third direction.

The third direction is perpendicular to the first direction, and the third direction is perpendicular to the second direction. Referring to FIG. 2 and FIG. 11, the third direction may refer to the height direction of the battery cell 100.

The first side wall 113 is perpendicular to the third direction, and it can be understood that the first side wall 113 is parallel to the first direction and the second direction.

In the same layer of battery cells 100, all the first side walls 113 are located on the same side of a corresponding layer of battery cells 100, and the first direction and the second direction are perpendicular to the third direction. It can be understood that, in the same layer of battery cells 100, the first side walls 113 of all the battery cells 100 are exposed outside the corresponding layer of battery cells 100 and located on the same side of the corresponding layer of battery cells 100. In other words, the first electrode terminals 131 and the second electrode terminals 132 of all the battery cells 100 are located on the same side of the corresponding layer of battery cells 100 and exposed outside the corresponding layer of battery cells 100.

By adopting the technical solution of the embodiment, the first electrode terminals 131 and the second electrode terminals 132 of all the battery cells 100 are located on the same side of the corresponding layer of battery cells 100, so that the first electrode terminals 131 and the second electrode terminals 132 can be exposed outside the corresponding layer of battery cells 100, facilitating connection between the first electrode terminals 131 and the second electrode terminals 132 and a busbar component and facilitating electrical connection of the battery cells 100.

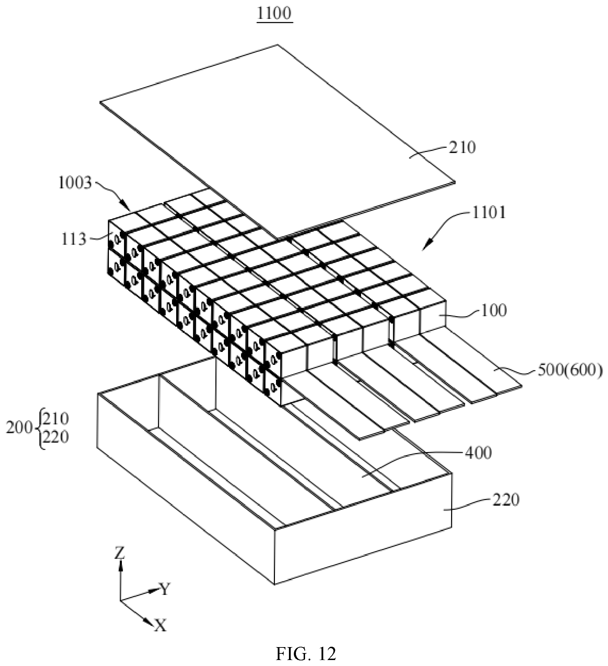

In some other embodiments of this application, referring to FIG. 12 to FIG. 14, the first electrode terminal 131 and the second electrode terminal 132 are arranged on the first side wall 113, and the first side wall 113 is perpendicular to the first direction.

The first side wall 113 is perpendicular to the first direction, and it can be understood that in the same layer of battery cells 100, the first side wall 113 is arranged toward battery cells 100 in a column adjacent thereto or away from battery cells 100 in a column adjacent thereto. In other words, the first electrode terminal 131 and the second electrode terminal 132 are arranged on a side of the battery cells 100 in the second direction.

By adopting the technical solution of the embodiment, the first electrode terminal 131 and the second electrode terminal 132 are arranged on the side of the battery cell 100 in the second direction, which can facilitate the arrangement of multiple layers of battery cells 100.

In some other embodiments of this application, referring to FIG. 12 to FIG. 14, in the same layer of battery cells 100, every two adjacent columns of battery cells 100 arranged in the second direction form a battery pack 1003. In the same battery pack 1003, first side walls 113 of two battery cells 100 arranged in the first direction are arranged back to back or face each other.

In the same layer of battery cells 100, every two adjacent columns of battery cells 100 arranged in the second direction form a battery pack 1003. It can be understood that a battery pack 1003 includes two columns of battery cells 100 arranged in the second direction, and the two columns of battery cells 100 are arranged adjacent to each other. In a plurality of battery packs 1003, two adjacent battery packs 1003 do not include the same column of battery packs 1003, that is, the two adjacent battery packs 1003 include four adjacent columns of battery cells 100. For example, a layer of battery cells 100 includes 6 columns of battery cells 100, and the 6 columns of battery cells 100 are divided into 3 battery packs 1003.

In the same battery pack 1003, first side walls 113 of two battery cells 100 arranged in the first direction are arranged back to back, it can be understood that, in the same group of battery packs 1003, first side walls 113 of two battery cells 100 arranged in the second direction are located at opposite ends of the same group of battery packs 1003 in the second direction, so that in the two adjacent battery packs 1003, first side walls 113 of two columns of battery cells 100 located in the middle are arranged face-to-face and spaced apart.

The first side walls 113 of the two battery cells 100 arranged in the first direction are arranged to face each other, and it can be understood that, in the same group of battery packs 1003, the first side walls 113 of the two battery cells 100 arranged in the second direction are located at the middle position of the two battery cells 100, that is, the first side walls 113 of the two columns of battery cells 100 located in the middle are arranged to face each other and be spaced apart.

By adopting the technical solution of the embodiment, in the same layer of battery cells 100, first side walls 113 of two columns of battery cells 100 may be arranged to face each other, so that the first electrode terminals 131 and the second electrode terminals 132 of the two columns of battery cells 100 may be arranged to face each other, a busbar component may be connected to the two columns of battery cells 100 at the same time, and in addition, a gap between the two columns of battery cells 100 may also be reduced, thereby improving structural compactness of a battery 1100.

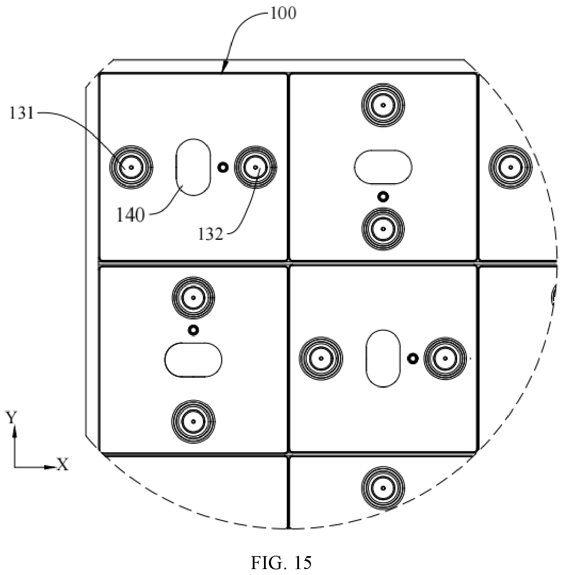

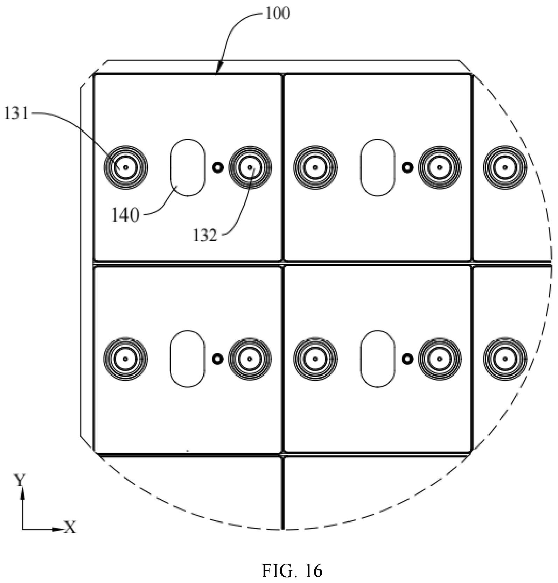

In some other embodiments of this application, referring to FIG. 15 to FIG. 17, arrangement directions of first electrode terminal 131 and second electrode terminal 132 of two adjacent battery cells 100 are perpendicular or parallel to each other.

Here, it can be understood that, in the same row of battery cells 100, arrangement directions of first electrode terminals 131 and second electrode terminals 132 of two adjacent battery cells 100 are perpendicular or parallel. Alternatively, in the same column of battery cells 100, the arrangement directions of the first electrode terminal 131 and the second electrode terminal 132 of two adjacent battery cells 100 are perpendicular or parallel. Alternatively, the arrangement directions of first electrode terminals 131 and second electrode terminals 132 of two battery cells 100 arranged up and down in two adjacent layers of battery cells 100 are perpendicular or parallel.

In a possible implementation, the arrangement directions of the first electrode terminals 131 and the second electrode terminals 132 of two adjacent battery cells 100 are perpendicular, and for the two adjacent battery cells 100, electrode terminals with different polarities may be distributed far away, facilitating a reduction in a short-circuit risk.

In another possible implementation, the arrangement directions of the first electrode terminal 131 and the second electrode terminal 132 of two adjacent battery cells 100 are parallel, and electrode terminals with the same polarity may be distributed relatively close to each other in the two adjacent battery cells 100 to facilitate electrical connection.

By adopting the technical solution of the embodiment, positions of electrode terminals can be flexibly distributed to meet different use requirements.

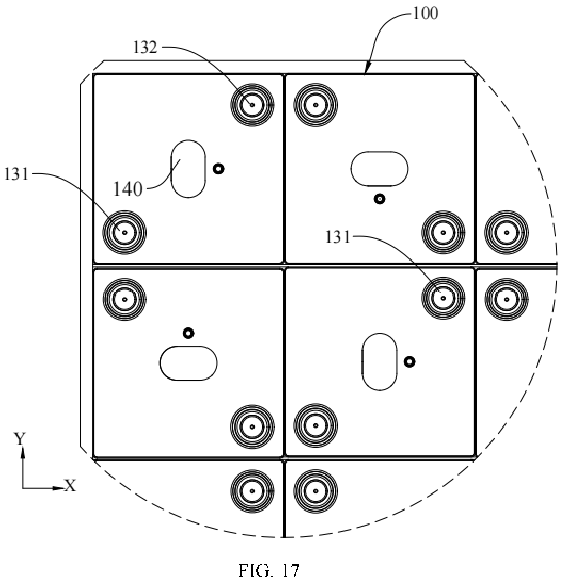

In some other embodiments of this application, referring to FIG. 17, first electrode terminals 131 or second electrode terminals 132 are arranged at corners of four adjacent battery cells 100 that are adjacent to each other.

Here, it may be understood that corners of the first electrode terminals 131 in the four adjacent battery cells 100 are arranged close to each other, or corners of the second electrode terminals 132 in the four adjacent battery cells 100 are arranged close to each other.

By adopting the technical solution of the embodiment, the first electrode terminals 131 or the second electrode terminals 132 are arranged at the corners of the four adjacent battery cells 100, so that electrode terminals with the same polarity are distributed in a concentrated manner, which can facilitate connection between the first electrode terminals 131 or the second electrode terminals 132 and a busbar component.

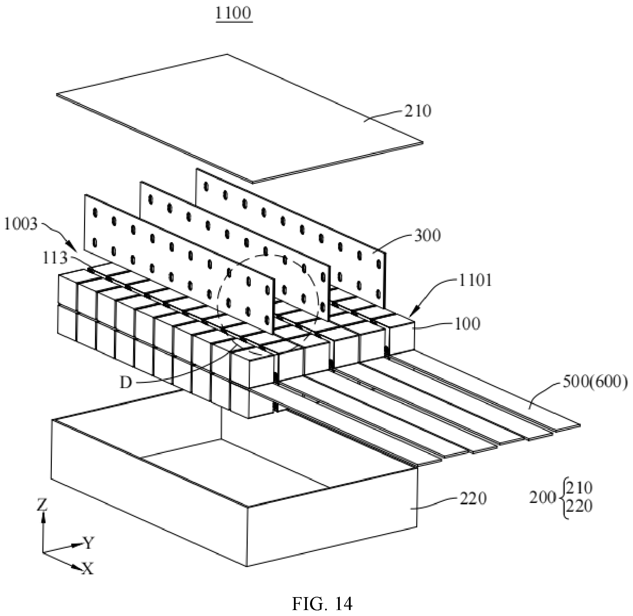

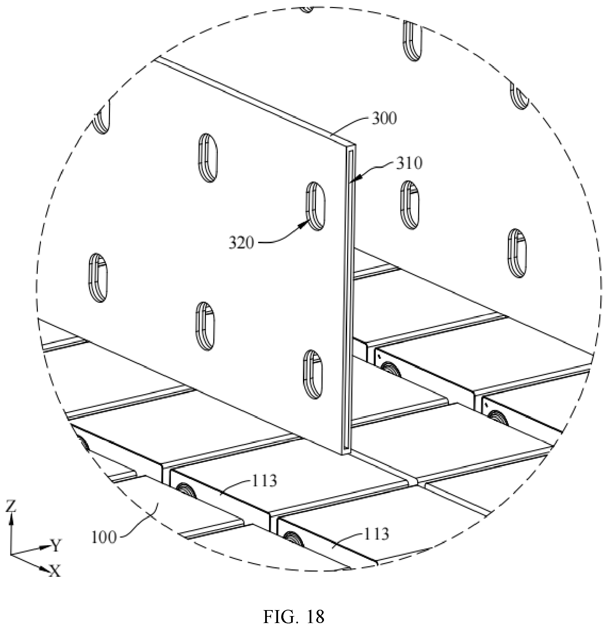

In some other embodiments of this application, referring to FIG. 14 and FIG. 18, a venting member 300 having a venting channel 310 is arranged between two adjacent columns of battery cells 100, a pressure relief mechanism 140 for releasing emissions is arranged on a side wall of a battery cell 100 that is adjacent to the venting member 300, and the pressure relief mechanism 140 is in communication with the venting channel 310 to guide emissions to be discharged.

The venting member 300 may refer to a component arranged between two adjacent columns of battery cells 100 and having a venting channel 310, and the venting channel 310 may refer to a channel for emissions to flow through.

For example, the venting member 300 may be a hollow plate-shaped structure, a cavity formed inside the venting member 300 is the venting channel 310, the venting member 300 is located between two adjacent columns of battery cells 100, a side wall of the venting member 300 facing the battery cells 100 is provided with a through hole 320, and the pressure relief mechanism 140 is arranged opposite to the through hole 320, so that emissions released by the pressure relief mechanism 140 may enter the venting channel 310 through the through hole 320 and be discharged out of the battery unit 1101 through the venting channel 310. Of course, in other examples, the venting member 300 may also be in other shapes.

By adopting the technical solution of the embodiment, the emissions released by the pressure relief mechanism 140 can flow out of the battery unit 1101 through the venting channel 310 of the venting member 300, thereby reducing a risk of the emissions contacting the battery cell 100 and facilitating improvement of use reliability of the battery 1100.

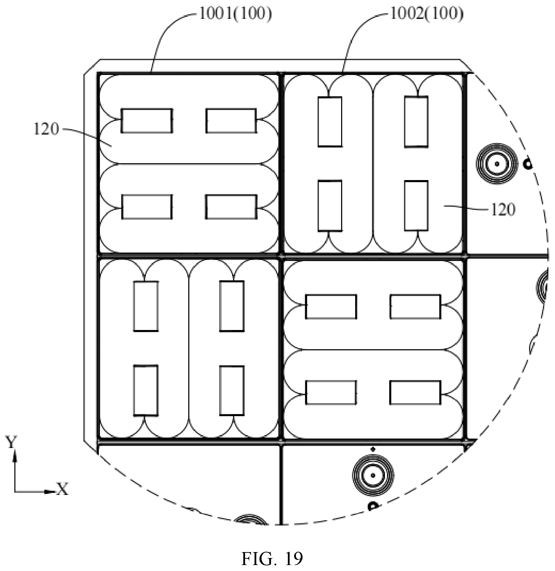

In some other embodiments of this application, referring to FIG. 19, at least one battery cell 100 in a battery unit 1101 is a first battery cell 1001, at least one battery cell 100 in the battery unit 1101 is a second battery cell 1002, and an electrode assembly 120 in the first battery cell 1001 is perpendicular to an electrode assembly 120 in the second battery cell 1002.

The plurality of battery cells 100 of the battery unit 1101 include two battery cells 100 whose electrode assemblies 120 are perpendicular to each other, one of the two battery cells 100 is a first battery cell 1001, and the other one is a second battery cell 1002. A number of the first battery cells 1001 may be, but not limited to, one, two, or three, and a number of the second battery cells 1002 may be, but not limited to, one, two, or three. The first battery cell 1001 and the second battery cell 1002 may be distributed in different columns or the same column, or may be distributed in different rows or the same row, or may be distributed in different layers or the same layer.

An electrode assembly 120 in the first battery cell 1001 and an electrode assembly 120 in the second battery cell 1002 are arranged vertically. It can be understood that the electrode assemblies 120 of the two battery cells 100 are arranged vertically, which may mean that height directions of the electrode assemblies 120 of the two battery cells 100 are perpendicular, or may mean that width directions of the electrode assemblies 120 of the two battery cells 100 are perpendicular, or may mean that length directions of the electrode assemblies 120 of the two battery cells 100 are perpendicular.

For ease of description, in the embodiment of this application, an example in which the width directions of the electrode assemblies 120 of the two battery cells 100 are perpendicular is used for description. Generally, the battery cells 100 are usually oriented and grouped in the width direction of the electrode assembly 120, and a swelling amplitude of the electrode assembly 120 in the width direction is significant, so that an expansion force for battery cells 100 on the electrode assembly 120 after grouping is accumulated in the width direction of the electrode assembly 120, and outermost sides of the battery cells 100 in the width direction of the electrode assembly 120 after grouping are all provided with end plates, and the end plates are greatly stressed after the expansion force is accumulated, so that thicker end plates need to be used to fix the battery cells 100, thereby increasing manufacturing costs of the battery 1100. In addition, heat of the battery cells 100 is also rapidly conducted between the battery cells 100 along the width direction of the electrode assembly 120, and a thick heat insulation pad needs to be added between the battery cells 100, which also increases the manufacturing costs of the battery 1100.

By adopting the technical solution of the embodiment, the electrode assembly 120 of the first battery cell 1001 and the electrode assembly 120 of the second battery cell 1002 are perpendicular, so that an expansion force for the electrode assembly 120 of the first battery cell 1001 and an expansion force and a heat conduction direction for the electrode assembly 120 of the second battery cell 1002 are vertically staggered, thereby reducing an accumulated expansion force for the battery cells 100, degrading heat transfer between battery cells 100, facilitating a reduction in thicknesses of an end plate and a heat insulation pad, and reducing manufacturing costs of the battery 1100. In addition, a casing 110 of the battery cell 100 is of a prismatic structure, and for the battery cell 100, it is not needed to distinguish between a length direction and a width direction, facilitating a vertical distribution of the electrode assemblies 120 in the first battery cell 1001 and the second battery cell 1002, and also facilitating the battery cells 100 to form a battery unit 1101 with a regular shape to meet use requirements of different batteries 1100.

In some other embodiments of this application, referring to FIG. 4 and FIG. 19, an electrode 120 is of a flat structure, a surface with a largest area of the electrodes 120 is a large surface 121, and a large surface 121 of a first battery cell 1001 is perpendicular to a large surface 121 of a second battery cell 1002.

Generally, the large surface 121 is perpendicular to the width direction of the battery assembly 120, and when battery cells 100 are grouped, the large surface 121 of the battery cell 100 is opposite to the large surface 121, so that expansion forces between the battery cells 100 are accumulated in a direction perpendicular to the large surface 121, and heat between the battery cells 100 can be quickly conducted through the large surface 121.

By adopting the technical solution of the embodiment, expansion at the large surface 121 is the most obvious, and the large surface 121 of the first battery cell 1001 is perpendicular to the large surface 121 of the second battery cell 1002, which can better reduce an accumulated expansion force for the battery cell 100, and in addition, the large surface 121 has a large area, a heat transfer area is large, and heat transfer is the fastest, which can also better degrade heat transfer between battery cells 100.

In some other embodiments of this application, the first battery cell 1001 includes at least two electrode assemblies 120 that are stacked, the second battery cell 1002 includes at least two electrode assemblies 120 that are stacked, and a stacking direction of the electrode assemblies 120 of the first battery cell 1001 is perpendicular to a stacking direction of the electrode assemblies 120 of the second battery cell 1002.

The first battery cell 1001 includes two or more electrode assemblies 120, and a number of the electrode assemblies 120 in the first battery cell 1001 may be, but is not limited to, two, three, or four. For example, the first battery cell 1001 includes four electrode assemblies 120, and the four electrode assemblies 120 are stacked along the width direction of the electrode assemblies 120.

The second battery cell 1002 includes two or more electrode assemblies 120, and a number of the electrode assemblies 120 in the second battery cell 1002 may be, but is not limited to, two, three or four. For example, the second battery cell 1002 includes four electrode assemblies 120, and the four electrode assemblies 120 are stacked along the width direction of the electrode assemblies 120.

In general, the electrode assemblies 120 are stacked in the width direction of the electrode assemblies 120, an expansion force between the battery cells 100 is accumulated in the stacking direction of the electrode assemblies 120, and heat between the battery cells 100 is also quickly conducted in the stacking direction of the electrode assemblies 120.

By adopting the technical solution of the embodiment, expansion of the electrode assembly 120 in the stacking direction is the most obvious, and the stacking direction of the electrode assembly 120 of the first battery cell 1001 is perpendicular to the stacking direction of the electrode assembly 120 of the second battery cell 1002, which can better reduce an accumulated expansion force for the battery cells 100, and in addition, heat transfer for the electrode assembly 120 is mainly along the stacking direction, which can also better degrade heat transfer between battery cells 100.

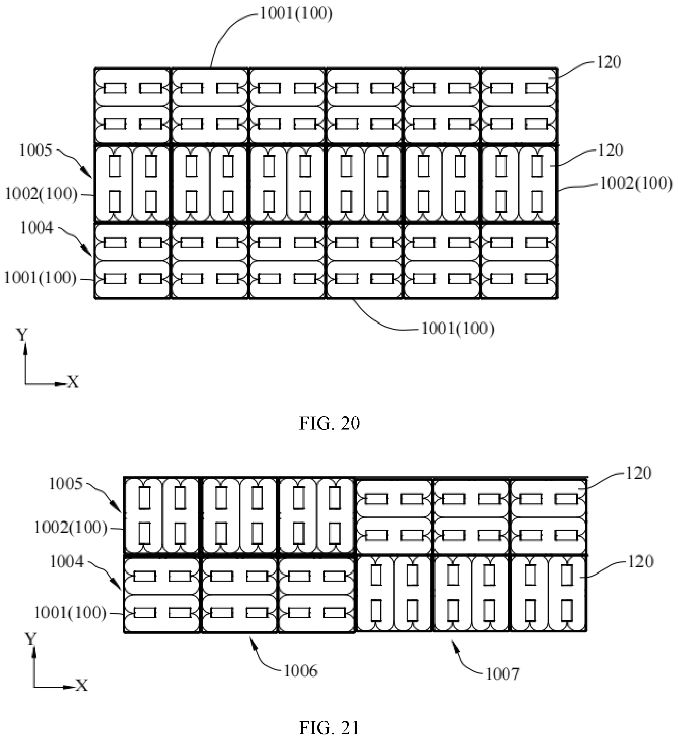

In some other embodiments of this application, referring to FIG. 20 to FIG. 22, a plurality of battery cells 100 in a first direction include a first battery cell 1001 and a second battery cell 1002; and/or, a plurality of battery cells 100 along a second direction include a first battery cell 1001 and a second battery cell 1002.

In a possible implementation, the plurality of battery cells 100 in the first direction include the first battery cell 1001 and the second battery cell 1002, and it may be understood that the first battery cell 1001 and the second battery cell 1002 are distributed in one row of battery cells 100. In the same column of battery cells 100, all the battery cells 100 are the first battery cells 1001 or the second battery cells 1002. Alternatively, in the same column of battery cells 100, some battery cells 100 are first battery cells 1001, and the other battery cells 100 are second battery cells 1002.

A row of battery cells 100 includes at least one first battery subunit 1004 and at least one second battery subunit 1005, the first battery subunit 1004 includes at least one first battery cell 1001, the second battery subunit 1005 includes at least one second battery unit 1101, and the first battery subunit 1004 and the second battery subunit 1005 are alternately arranged along the first direction. A number of the first battery cells 1001 in the first battery subunit 1004 may be the same as or different from a number of the second battery cells 1002 in the second battery subunit 1005.

For example, referring to FIG. 20, a number of first battery cells 1001 in a first battery subunit 1004 may be the same as a number of second battery cells 1002 in a second battery subunit 1005, and the number of the first battery cells 1001 in the first battery subunit 1004 may be one. In other words, the first battery cells 1001 and the second battery cells 1002 are alternately distributed along the first direction. In the same column of battery cells 100, all the battery cells 100 are the first battery cells 1001 or the second battery cells 1002.

Certainly, in other examples, the number of the first battery cells 1001 in the first battery subunit 1004 may be, but is not limited to, two or three. The number of the second battery cells 1002 in the second battery subunit 1005 may be, but is not limited to, two or three.

The plurality of battery cells 100 along the first direction include the first battery cell 1001 and the second battery cell 1002. The electrode assemblies 120 in the first battery cell 1001 and the second battery cell 1002 may be vertically distributed, reducing an accumulated expansion force and heat transfer for the battery unit 1101 in the first direction and thereby, reducing thicknesses of an end plate and a heat insulation pad and reducing manufacturing costs of the battery 1100.

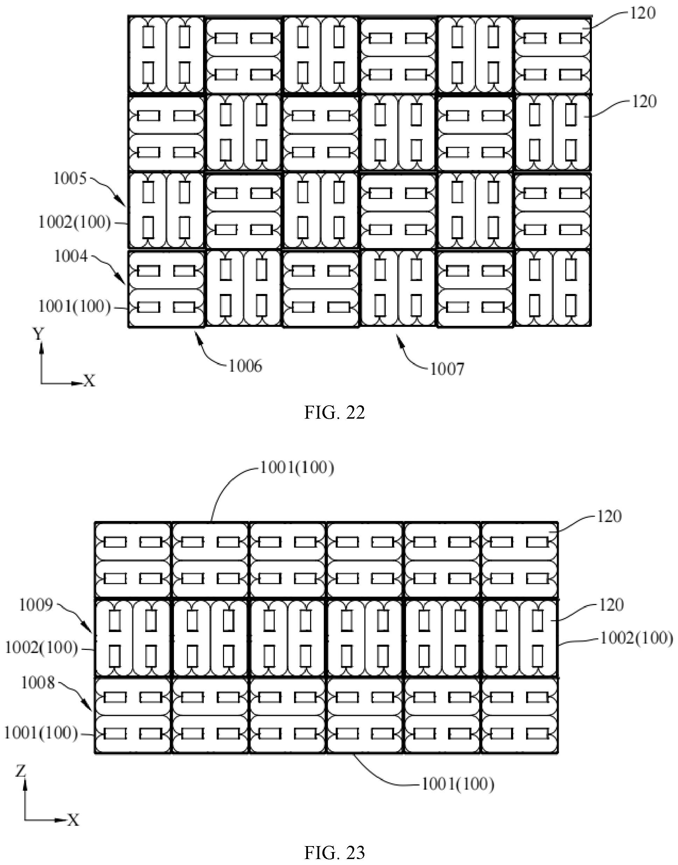

In another possible implementation, referring to FIG. 21 or FIG. 22, the plurality of battery cells 100 in the second direction include a first battery cell 1001 and a second battery cell 1002, and it may be understood that the first battery cell 1001 and the second battery cell 1002 are distributed in a column of battery cells 100. In the same row of battery cells 100, all the battery cells 100 are the first battery cells 1001 or the second battery cells 1002. Alternatively, in the same row of battery cells 100, some battery cells 100 are first battery cells 1001, and the other battery cells 100 are second battery cells 1002.

A column of battery cells 100 includes at least one third battery subunit 1006 and at least one fourth battery subunit 1007, the third battery subunit 1006 includes at least one first battery cell 1001, the fourth battery subunit 1007 includes at least one second battery unit 1101, and the third battery subunit 1006 and the fourth battery subunit 1007 are alternately arranged along the second direction. A number of the first battery cells 1001 in the third battery subunit 1006 may be the same as or different from a number of the second battery cells 1002 in the fourth battery subunit 1007.

For example, referring to FIG. 21, a number of the first battery cells 1001 in the third battery subunit 1006 may be the same as a number of the second battery cells 1002 in the fourth battery subunit 1007, and the number of the first battery cells 1001 in the third battery subunit 1006 may be three. Referring to FIG. 22, the number of the first battery cell 1001 in the third battery subunit 1006 may be one. That is, the first battery cell 1001 and the second battery cell 1002 are alternately distributed along the second direction.

Certainly, in other examples, the number of the first battery cells 1001 in the third battery subunit 1006 may be, but is not limited to, two or four. The number of the second battery cells 1002 in the fourth battery subunit 1007 may be, but is not limited to, two or four.

The plurality of battery cells 100 along the second direction include the first battery cell 1001 and the second battery cell 1002. The electrode assemblies 120 in the first battery cell 1001 and the second battery cell 1002 may be vertically distributed, reducing an accumulated expansion force and heat transfer for the battery unit 1101 in the second direction.

In still another possible implementation, referring to FIG. 21 and FIG. 22, a plurality of battery cells 100 in a first direction include a first battery cell 1001 and a second battery cell 1002, and a plurality of battery cells 100 in a second direction include the first battery cell 1001 and the second battery cell 1002. The electrode assemblies 120 in the first battery cell 1001 and the second battery cell 1002 are vertically distributed, reducing an accumulated expansion force and heat transfer for the battery unit 1101 in the second and first directions and thereby, reducing thicknesses of an end plate and a heat insulation pad and reducing manufacturing costs of the battery 1100.

By adopting the technical solution of the embodiment, an accumulated expansion force and heat transfer for a battery unit 1101 in the first direction and/or the second direction can be degraded.

In some other embodiments of this application, referring to FIG. 22, a plurality of battery cells 100 in a first direction include a first battery cell 1001 and a second battery cell 1002, a plurality of battery cells 100 in a second direction include a first battery cell 1001 and a second battery cell 1002, the first battery cell 1001 and the second battery cell 1002 in the first direction are alternately arranged, and the first battery cell 1001 and the first battery cell 1001 in the second direction are alternately arranged.

It can be understood that one first battery cell 1001 in the first battery subunit 1004 and one second battery cell 1002 in the second battery subunit 1005 are provided. In other words, the first battery cells 1001 and the second battery cells 1002 are alternately distributed along the first direction. One first battery cell 1001 in the third battery subunit 1006 and one second battery cell 1002 in the fourth battery subunit 1007 are provided. In other words, the first battery cell 1001 and the second battery cell 1002 are alternately distributed along the second direction.

By adopting the technical solution of the embodiment, the first battery cell 1001 and the second battery cell 1002 are alternately arranged at intervals in the first direction and the second direction, which can better reduce an accumulated expansion force and heat transfer for the battery unit 1101 in the first direction and the second direction.

For example, referring to FIG. 20, one first battery cell 1001 in the first battery subunit 1004 and one second battery cell 1002 in the second battery subunit 1005 are provided. In other words, the first battery cell 1001 and the second battery cell 1002 are alternately distributed in the first direction. In two adjacent columns of battery cells 100, all battery cells 100 in one column of battery cells 100 are first battery cells 1001, and all battery cells 100 in the other column of battery cells 100 are second battery cells 1002.

For example, referring to FIG. 21, one first battery cell 1001 in the first battery subunit 1004 and one second battery cell 1002 in the second battery subunit 1005 are provided. In other words, the first battery cell 1001 and the second battery cell 1002 are alternately distributed in the first direction. A number of the first battery cells 1001 in the third battery subunit 1006 and a number of the second battery cells 1002 in the fourth battery subunit 1007 are three. In other words, the third battery subunit 1006 and the fourth battery subunit 1007 are alternately distributed along the second direction.

For example, referring to FIG. 22, one first battery cell 1001 in the first battery subunit 1004 and one second battery cell 1002 in the second battery subunit 1005 are provided. In other words, the first battery cell 1001 and the second battery cell 1002 are alternately distributed in the first direction. One first battery cell 1001 in the third battery subunit 1006 and one second battery cell 1002 in the fourth battery subunit 1007 are provided. In other words, the first battery cell 1001 and the second battery cell 1002 are alternately distributed along the second direction.

In some other embodiments of this application, referring to FIG. 23 to FIG. 25, a battery unit 1101 includes a plurality of layers of battery cells 100, the plurality of layers of battery cells 100 are stacked in a third direction, the plurality of battery cells 100 arranged in the third direction include a first battery cell 1001 and a second battery cell 1002, and a first direction and a second direction are perpendicular to the third direction.

The battery cells 100 may be stacked in the third direction, so that a plurality of layers of battery cells 100 are stacked in the third direction. Among the battery cells 100 arranged in the third direction, at least one battery cell 100 is a first battery cell 1001, and at least one battery cell 100 is a second battery cell 1002. In other words, in the third direction, the first battery cell 1001 and the second battery cell 1002 may be distributed in different layers of battery cells 100. In the same layer of battery cells 100, all the battery cells 100 are the first battery cells 1001 or the second battery cells 1002. Alternatively, in the same layer of battery cells 100, some battery cells 100 are the first battery cells 1001, and the remaining battery cells 100 are the second battery cells 1002.

The battery cells 100 arranged in the third direction include at least one fifth battery subunit 1008 and at least one sixth battery subunit 1009, the fifth battery subunit 1008 includes at least one first battery cell 1001, the sixth battery subunit 1009 includes at least one second battery unit 1101, and the fifth battery subunit 1008 and the sixth battery subunit 1009 are alternately arranged in the third direction. A number of the first battery cells 1001 in the fifth battery subunit 1008 may be the same as or different from a number of the second battery cells 1002 in the sixth battery subunit 1009.

Of course, in other examples, the number of the first battery cells 1001 in the fifth battery subunit 1008 may be, but not limited to, one, two, or three. The number of the second battery cells 1002 in the sixth battery subunit 1009 may be, but not limited to, one, two, or three.

By adopting the technical solution of the embodiment, the plurality of battery cells 100 along the third direction include the first battery cell 1001 and the second battery cell 1002. The electrode assemblies 120 in the first battery cell 1001 and the second battery cell 1002 may be vertically distributed, reducing an accumulated expansion force and heat transfer for the battery unit 1101 in the third direction.

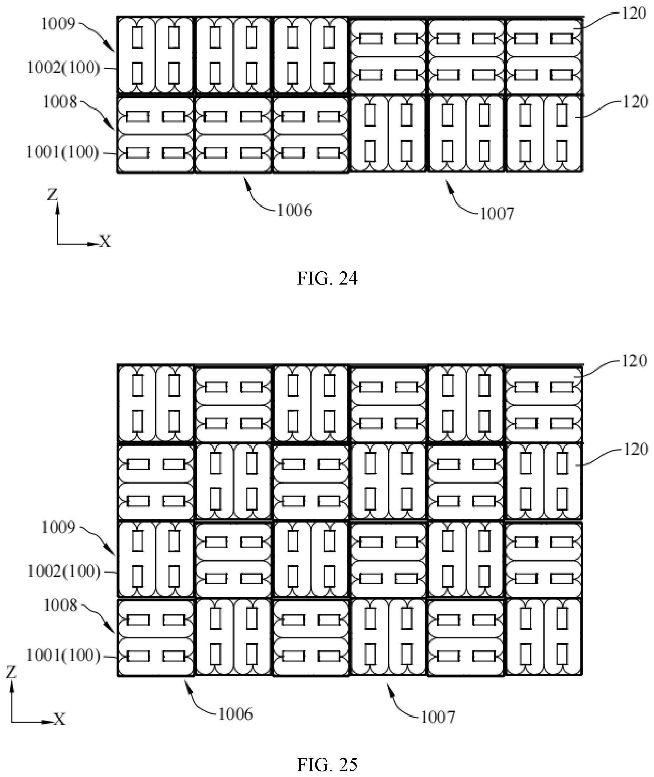

In some other embodiments of this application, referring to FIG. 25, a first battery cell 1001 and a second battery cell 1002 along a third direction are alternately arranged.

It can be understood that one first battery cell 1001 in the fifth battery subunit 1008 and one second battery cell 1002 in the sixth battery subunit 1009 are provided. In other words, the first battery cell 1001 and the second battery cell 1002 are alternately distributed along the third direction.

Generally, since expansion directions for two adjacent layers of battery cells 100 are the same, an expansion space needs to be reserved between two adjacent layers. However, the expansion space affects structural strength of a battery unit 1101 and may cause unqualified structural strength of the battery unit 1101, and therefore, the battery cell 100 is usually provided as a two-layer structure.

By adopting the technical solution of the embodiment, the first battery cells 1001 and the second battery cells 1002 are alternately arranged at intervals in the third direction, which can better reduce an accumulated expansion force and heat transfer for the battery unit 1101 in the third direction. In addition, the first battery cells 1001 and the second battery cells 1002 are alternately distributed along the third direction, so that no expansion space needs to be reserved between two adjacent layers of battery cells 100, thereby facilitating an implementation of a stacking mode of three or more layers of battery cells 100.

For example, referring to FIG. 23, one first battery cell 1001 in the fifth battery subunit 1008 and one second battery cell 1002 in the sixth battery subunit 1009 are provided. In other words, the first battery cell 1001 and the second battery cell 1002 are alternately distributed in the third direction. In two adjacent columns of battery cells 100 in the third direction, all battery cells 100 in one column of battery cells 100 are the first battery cells 1001, and all battery cells 100 in the other column of battery cells 100 are the second battery cells 1002.

For example, referring to FIG. 24, one first battery cell 1001 in a fifth battery subunit 1008 and one second battery cell 1002 in a sixth battery subunit 1009 are provided. In other words, the first battery cell 1001 and the second battery cell 1002 are alternately distributed in the third direction. A number of the first battery cells 1001 in the third battery subunit 1006 and a number of the second battery cells 1002 in the fourth battery subunit 1007 are three. In other words, the third battery subunit 1006 and the fourth battery subunit 1007 are alternately distributed along the second direction.

For example, referring to FIG. 25, one first battery cell 1001 in the fifth battery subunit 1008 and one second battery cell 1002 in the sixth battery subunit 1009 are provided. In other words, the first battery cell 1001 and the second battery cell 1002 are alternately distributed in the third direction. One first battery cell 1001 in the third battery subunit 1006 and one second battery cell 1002 in the fourth battery subunit 1007 are provided. In other words, the third battery subunit 1006 and the fourth battery subunit 1007 are alternately distributed along the second direction.

A battery 1100 in embodiments of the present application is described in conjunction with some specific embodiments.

### Embodiment 5

In the embodiment, referring to FIG. 2, FIG. 11, FIG. 15, and FIG. 16, the battery 1100 includes a battery unit 1101, and the battery unit 1101 includes at least one battery cell 100 described in the foregoing embodiments.

In the embodiment, the battery unit 1101 includes at least one layer of battery cells 100, each layer of battery cells 100 includes a plurality of battery cells 100 arranged in a matrix in a first direction and a second direction, and the first direction is perpendicular to the second direction. One layer of the battery cells 100 is provided.

In the embodiment, a first electrode terminal 131 and a second electrode terminal 132 are provided on a first side wall 113, the first side wall 113 is perpendicular to a third direction. In the same layer of battery cells 100, all the first side walls 113 are located on the same side of a corresponding layer of battery cells 100, and the first direction and the second direction are perpendicular to the third direction.

In the embodiment, arrangement directions of the first electrode terminal 131 and the second electrode terminal 132 of two adjacent battery cells 100 are perpendicular or parallel.

### Embodiment 6

The embodiment differs from Embodiment 5 in that: referring to FIG. 17, first electrode terminals 131 or second electrode terminals 132 are arranged at corners of four adjacent battery cells 100 that are adjacent to each other.

### Embodiment 7

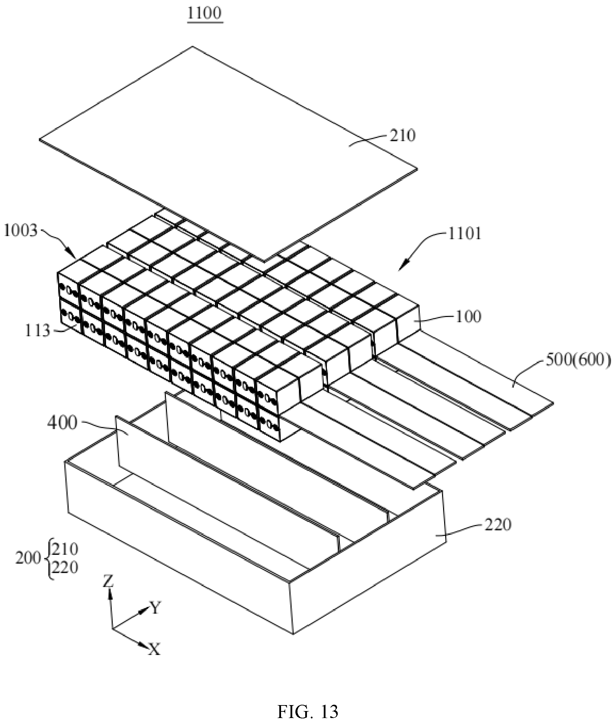

The embodiment differs from Embodiment 5 in that: referring to FIG. 12 and FIG. 13, a first electrode terminal 131 and a second electrode terminal 132 are arranged on a first side wall 113, the first side wall 113 being perpendicular to the first direction. A number of layers of battery cells 100 is two.

In the embodiment, in the same layer of battery cells 100, every two adjacent columns of battery cells 100 arranged in the second direction form a battery pack 1003. In the same battery pack 1003, first side walls 113 of two battery cells 100 arranged in the first direction are arranged back to back.

### Embodiment 8

The embodiment differs from Embodiment 7 in that: referring to FIG. 14, in the same layer of battery cells 100, every two adjacent columns of battery cells 100 arranged in a second direction form a battery pack 1003. In the same battery pack 1003, first side walls 113 of two battery cells 100 arranged in a first direction are arranged to face each other.

In the embodiment, referring to FIG. 18, a venting member 300 having a venting channel 310 is provided between two adjacent columns of battery cells 100, a pressure relief mechanism 140 for releasing emissions is provided on a side wall of the battery cell 100 adjacent to the venting member 300, and the pressure relief mechanism 140 is in communication with the venting channel 310 to guide emissions to be discharged.

### Embodiment 9

The embodiment differs from Embodiment 5 in the following: referring to FIG. 4, FIG. 19 and FIG. 20, at least one battery cell 100 in a battery unit 1101 is a first battery cell 1001, at least one battery cell 100 in the battery unit 1101 is a second battery cell 1002, and an electrode assembly 120 in the first battery cell 1001 and an electrode assembly 120 in the second battery cell 1002 are arranged vertically.

In the embodiment, the electrodes 120 are of a flat structure, a surface with a largest area of the electrodes 120 is a large surface 121, and a large surface 121 of the first battery cell 1001 is perpendicular to a large surface 121 of the second battery cell 1002.

In the embodiment, the first battery cell 1001 includes at least two electrode assemblies 120 that are stacked, the second battery cell 1002 includes at least two electrode assemblies 120 that are stacked, and a stacking direction of the electrode assemblies 120 of the first battery cell 1001 is perpendicular to a stacking direction of the electrode assemblies 120 of the second battery cell 1002.

In the embodiment, a plurality of battery cells 100 along a first direction include the first battery cell 1001 and the second battery cell 1002. It can be understood that a row of battery cells 100 includes at least one first battery subunit 1004 and at least one second battery subunit 1005. The first battery subunit 1004 includes at least one first battery cell 1001, the second battery subunit 1005 includes at least one second battery unit 1101, the first battery subunit 1004 and the second battery subunit 1005 are alternately arranged along the first direction, and one first battery cell 1001 in the first battery subunit 1004 and one second battery cell 1002 in the second battery subunit 1005 are provided. In other words, the first battery cell 1001 and the second battery cell 1002 are alternately distributed along the first direction.

In the embodiment, in two adjacent columns of battery cells 100, all battery cells 100 in one column of battery cells 100 are the first battery cells 1001, and all battery cells 100 in the other column of battery cells 100 are the second battery cells 1002.

### Embodiment 10

The embodiment differs from Embodiment 9 in the following: referring to FIG. 21, a column of battery cells 100 includes at least one third battery subunit 1006 and at least one fourth battery subunit 1007, the third battery subunit 1006 includes at least one first battery cell 1001, the fourth battery subunit 1007 includes at least one second battery unit 1101, and the third battery subunit 1006 and the fourth battery subunit 1007 are alternately arranged along the second direction. A number of the first battery cells 1001 in the third battery subunit 1006 and a number of the second battery cells 1002 in the fourth battery subunit 1007 are three. In other words, the third battery subunit 1006 and the fourth battery subunit 1007 are alternately distributed along the second direction.

### Embodiment 11

The embodiment differs from Embodiment 10 in the following: referring to FIG. 22, a plurality of battery cells 100 in a second direction include first battery cells 1001 and second battery cells 1002, the first battery cells 1001 and the second battery cells 1001 in the second direction are alternately arranged, and it can be understood that one first battery cell 1001 in a third battery subunit 1006 and one second battery cell 1002 in a fourth battery subunit 1007 are provided, that is, the first battery cell 1001 and the second battery cell 1002 being alternately distributed in the second direction.

### Embodiment 12

The embodiment differs from Embodiment 9 in the following. Referring to FIG. 23, the battery unit 1101 includes a plurality of layers of battery cells 100, the plurality of layers of battery cells 100 are stacked in a third direction, the plurality of battery cells 100 arranged in the third direction include a first battery cell 1001 and a second battery cell 1002, and the first direction and the second direction are perpendicular to a third direction. It can be understood that the battery cells 100 arranged in the third direction include at least one fifth battery subunit 1008 and at least one sixth battery subunit 1009, the fifth battery subunit 1008 includes at least one first battery cell 1001, the sixth battery subunit 1009 includes at least one second battery unit 1101, and the fifth battery subunit 1008 and the sixth battery subunit 1009 are alternately arranged in the third direction.

In the embodiment, the first battery cell 1001 and the second battery cell 1002 along the third direction are alternately arranged, and it can be understood that one first battery cell 1001 in the fifth battery subunit 1008 and one second battery cell 1002 in the sixth battery subunit 1009 are provided. In other words, the first battery cell 1001 and the second battery cell 1002 are alternately distributed along the third direction.

In the embodiment, in two adjacent columns of battery cells 100 in the third direction, all battery cells 100 in one column of battery cells 100 are the first battery cells 1001, and all battery cells 100 in the other column of battery cells 100 are the second battery cells 1002.

### Embodiment 13

The embodiment differs from Embodiment 12 in that: referring to FIG. 24, a number of first battery cells 1001 in a third battery subunit 1006 and a number of second battery cells 1002 in a fourth battery subunit 1007 are three, that is, the third battery subunit 1006 and the fourth battery subunit 1007 being alternately distributed along the second direction.

### Embodiment 14

The embodiment differs from Embodiment 13 in that: referring to FIG. 25, one first battery cell 1001 in a third battery subunit 1006 and one second battery cell 1002 in a fourth battery subunit 1007 are provided, that is, the third battery subunit 1006 and the fourth battery subunit 1007 being alternately distributed along the second direction.

In another some embodiments of the present application, an electrical device is also provided, including the battery 1100 as described in the above embodiments.

The above descriptions of the various embodiments tend to emphasize differences between the various embodiments. For same or similar parts thereof, refer to these embodiments. For brevity, details are not described herein again.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:
a casing;
an electrode assembly provided in the casing;
a first electrode terminal electrically connected to the electrode assembly;
a second electrode terminal electrically connected to the electrode assembly, wherein the first electrode terminal and the second electrode terminal have different polarities for outputting or inputting electrical energy,
wherein the casing is of a prismatic structure; the casing is provided with a first side wall and a second side wall arranged opposite each other in the axial direction, the first side wall and the second side wall are square, and at least one of the first electrode terminal and the second electrode terminal is arranged on the first side wall or the second side wall.

2. The battery cell according to claim 1, wherein the first electrode terminal and the second electrode terminal are arranged on the first side wall, and an angle between each of arrangement directions of the first electrode terminal and the second electrode terminal and a length direction of the first side wall is α, where 0°≤α≤45°.

3. The battery cell according to claim 2, wherein the first electrode terminal and the second electrode terminal are respectively located at two opposite corners of the first side wall.

4. The battery cell according to any one of claims 1 to 3, wherein the first electrode terminal and the second electrode terminal are arranged on the first side wall, and the first side wall is provided with at least one pressure relief mechanism for releasing emissions; and/or, the second side wall is provided with at least one pressure relief mechanism for releasing emissions.

5. The battery cell according to claim 4, wherein the pressure relief mechanism comprises a circular pressure relief mechanism.

6. The battery cell according to any one of claims 1 to 5, wherein the electrode assembly is of a flat structure.

7. The battery cell according to claim 6, wherein the casing further has a third side wall and a fourth side wall parallel to the axial direction and adjacent to each other, a surface of the electrode assembly with a largest area is a large surface, the third side wall is arranged opposite to the large surface, and a thickness of the third side wall is greater than a thickness of the fourth side wall.

8. The battery cell according to any one of claims 1 to 7, wherein the casing comprises a casing body and an end cap, the end cap covers an opening of the casing body, the end cap forms the first side wall, and a side wall of the casing body opposite to the end cap forms the second side wall; and the end cap forms the second side wall, and the side wall of the casing body opposite the end cap forms the first side wall.

9. A battery, comprising a battery unit comprising the battery cell according to any of claims 1 to 8.

10. The battery according to claim 9, wherein a first electrode terminal and a second electrode terminal are arranged on a first side wall, a first side wall is perpendicular to a third direction, in the same layer of battery cells, all first side walls are located on the same side of a corresponding layer of battery cells, and the first direction and the second direction are perpendicular to the third direction.

11. The battery according to claim 10, wherein the first electrode terminal and the second electrode terminal are arranged on the first side wall, the first side wall is perpendicular to a third direction, in the same layer of the battery cells, all the first side walls are located on the same side of a corresponding layer of the battery cells, and the first direction and the second direction are perpendicular to the third direction.

12. The battery according to claim 10, wherein the first electrode terminal and the second electrode terminal are arranged on the first side wall, and the first side wall is perpendicular to the first direction.

13. The battery according to claim 12, wherein in the same layer of the battery cells, every two adjacent columns of battery cells arranged in the second direction form a battery pack; and in the same battery pack, first side walls of two battery cells arranged in the first direction are arranged opposite to or facing each other.

14. The battery according to any one of claims 11 to 13, wherein arrangement directions of first electrode terminals and second electrode terminals of two adjacent battery cells are perpendicular or parallel to each other.

15. The battery according to any one of claims 11 to 14, wherein corners of four adjacent battery cells adjacent to each other are each provided with the first electrode terminal or the second electrode terminal.

16. The battery according to any one of claims 10 to 15, wherein a venting member having a venting channel is provided between two adjacent columns of battery cells, a pressure relief mechanism for releasing emissions is arranged on a side wall of a battery cell adjacent to the venting member, and the pressure relief mechanism is in communication with the venting channel to guide the emissions to be discharged.

17. The battery according to any one of claims 10 to 16, wherein at least one of the battery cells in the battery unit is a first battery cell, at least one of the battery cells in the battery unit is a second battery cell, and an electrode assembly in the first battery cell is arranged perpendicular to an electrode assembly in the second battery cell.

18. The battery according to claim 17, wherein the electrode assembly is of a flat structure, a surface with a largest area of the electrode assembly is a large surface; a large surface of the first battery cell is perpendicular to a large surface of the second battery cell.

19. The battery according to claim 17 or 18, wherein the first battery cell comprises at least two stacked electrode assemblies, the second battery cell comprises at least two stacked electrode assemblies, and a stacking direction of the electrode assemblies of the first battery cell is perpendicular to a stacking direction of the electrode assemblies of the second battery cell.

20. The battery according to any one of claims 17 to 19, wherein the plurality of battery cells in the first direction include the first battery cell and the second battery cell; and/or the plurality of battery cells in the second direction comprise the first battery cell and the second battery cell.

21. The battery according to claim 20, wherein the plurality of battery cells in the first direction comprise the first battery cell and the second battery cell, the plurality of battery cells in the second direction comprise the first battery cell and the second battery cell, the first battery cell and the second battery cell in the first direction are alternately arranged, and the first battery cell and the first battery cell in the second direction are alternately arranged.

22. The battery according to any one of claims 17 to 21, wherein the battery unit comprises a plurality of layers of battery cells, the plurality of layers of battery cells are stacked in a third direction, the plurality of battery cells arranged in the third direction comprise the first battery cell and the method comprising: second battery cell, and the first direction and the second direction are perpendicular to the third direction.

23. The battery according to claim 22, wherein the first battery cell and the second battery cell in the third direction are alternately arranged.

24. An electrical device, comprising: a battery according to any one of claims 9 to 23.
